(19) Europäisches Patentamt
European Patent Office
Office européen des brevets

(11) EP 3 929 227 B1

(12) EUROPEAN PATENT SPECIFICATION

(45) Date of publication and mention of the grant of the patent:
**26.11.2025 Bulletin 2025/48**

(21) Application number: **20808843.5**

(22) Date of filing: **15.05.2020**

(51) International Patent Classification (IPC):
***C08F 297/02*** *(2006.01)* ***C08F 4/64*** *(2006.01)*
***C08F 4/659*** *(2006.01)* ***C08F 4/44*** *(2006.01)*
***C08F 4/52*** *(2006.01)* ***C08F 2/38*** *(2006.01)*
***C08F 295/00*** *(2006.01)* ***C08L 53/02*** *(2006.01)*
***C08L 53/00*** *(2006.01)* ***C08F 210/16*** *(2006.01)*
***C08F 212/08*** *(2006.01)*

(52) Cooperative Patent Classification (CPC):
(C-Sets available)
**C08F 212/08; C08F 210/16; C08F 295/00; C08L 53/00;** C08F 4/65908; C08F 4/65912; C08F 2410/01 (Cont.)

(86) International application number:
**PCT/KR2020/006448**

(87) International publication number:
**WO 2020/235887 (26.11.2020 Gazette 2020/48)**

# (54) POLYOLEFIN-POLYSTYRENE-BASED MULTIBLOCK COPOLYMER

MULTIBLOCKCOPOLYMER AUF POLYOLEFIN-POLYSTYROL-BASIS

COPOLYMÈRE MULTISÉQUENCÉ À BASE DE POLYOLÉFINE-POLYSTYRÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2019 KR 20190058295**
**30.09.2019 KR 20190121192**

(43) Date of publication of application:
**29.12.2021 Bulletin 2021/52**

(73) Proprietor: **LG CHEM, LTD.**
**Yeongdeungpo-gu,**
**Seoul 07336 (KR)**

(72) Inventors:
- **IM, Seul Ki**
  **Daejeon 34122 (KR)**
- **SA, Seok Pil**
  **Daejeon 34122 (KR)**
- **LEE, Hyun Mo**
  **Daejeon 34122 (KR)**
- **PARK, Ji Hyun**
  **Daejeon 34122 (KR)**
- **KIM, Yun Kon**
  **Daejeon 34122 (KR)**
- **LEE, Ki Soo**
  **Daejeon 34122 (KR)**
- **SHIN, Eun Ji**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**JP-B2- S5 227 162**
**KR-A- 20100 134 571**
**KR-B1- 101 732 418**
**KR-B1- 101 848 781**
**US-A1- 2016 230 000**
**US-A1- 2017 037 174**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 4/64144;**
**C08F 212/08, C08F 4/46;**
C08F 210/16, C08F 210/14, C08F 212/08,
C08F 2500/02, C08F 2500/03, C08F 2500/36,
C08F 2500/39

## Description

## TECHNICAL FIELD

### Cross-reference to Related Applications

This application claims the benefit of Korean Patent Application No. 10-2019-0058295, filed on May 17, 2019 and Korean Patent Application No. 10-2019-0121192, filed on September 30, 2019, in the Korean Intellectual Property Office.

### Technical Field

The present invention relates to a polyolefin-polystyrene multi-block copolymer having a structure in which polystyrene chains are attached to both ends of a polyolefin chain.

## BACKGROUND ART

Research and development of block copolymers are being actively carried out as widely used materials in not only common plastics but also high-tech devices. In particular, styrene-olefin copolymer resins containing both a polyolefin (PO) block and a polystyrene (PS) block have excellent heat resistance, light resistance, and elastic force, and thus are being useful in various technical fields.

Currently, the market with respect to polyolefin-polystyrene block copolymers, such as, Styrene-EthyleneButylene-Styrene (SEBS) or Styrene-Ethylene-Propylene-Styrene (SEPS) have been formed on a scale of several hundred thousand metric tons worldwide. A representative example of the styrene-olefin copolymer resins may include a polystyrene-block-poly(ethylene-co-1-butene)-block-polystyrene (SEBS) triblock copolymer. The SEBS triblock copolymer exhibits thermoplastic elastomer characteristics since the hard polystyrene domain in the structure thereof is separated from a soft poly(ethylene-co-1-butene) matrix and acts as a physical cross-linking site. According to these characteristics, the SEBS has been widely used in the group of products requiring rubbers, and plastics, and the demand thereof is increasing greatly as the use range thereof is gradually increased.

Meanwhile, since the molecular weight and molecular weight distribution of the copolymer are critical factors for determining mechanical properties, and thermal properties of materials and have a great influence on processability, it is being recognized that analyzing the molecular weight for analyzing physical properties of the copolymer is the most basic and important technique. Methods for determining the molecular weight includes various methods such as viscometry, end group analysis, and light scattering, but the most widely used method is a method using gel permeation chromatography (GPC).

GPC is a method that separates materials based on a molecular weight difference by filling porous gels in a column, using a phenomenon in which a material having a large molecular weight is discharged without passing through pores in the gel, thereby reducing the retention time, and a material having a small molecular weight is discharged after passing through the gel pores, thereby increasing the retention time. Thus, a number average molecular weight and a weight average molecular weight can be calculated.

Under the above background, the present inventors have studied for producing a polyolefin-polystyrene multi-block copolymer exhibiting desired physical properties such as tensile strength and elongation at break, and confirmed that a polyolefin-polystyrene multi-block copolymer exhibiting desired physical properties can be produced by controlling the weight average molecular weight and the molecular weight distribution of the copolymer to be within a specific range, and completed the present invention.

KR 101 848 781 B1 describes certain polystyrene-poly(ethylene-co-propylene)-polystyrene block copolymers that were obtained using the catalyst as employed in Comparative Examples 5 to 7 below.

[PRIOR ART DOCUMENTS]

[PATENT DOCUMENTS]

(Patent Document 1) Korean Patent No. 10-1657925

## DISCLOSURE OF THE INVENTION

## TECHNICAL PROBLEM

An aspect of the present invention provides a polyolefin-polystyrene multi-block copolymer having a structure in

which polystyrene chains are attached to both ends of a polyolefin chain, and more particularly, provides a polyolefin-polystyrene multi-block copolymer exhibiting excellent mechanical properties such as tensile strength, elongation at break, and modulus by maintaining a specific relationship with the weight average molecular weight and the molecular weight distribution.

## TECHNICAL SOLUTION

According to an aspect of the present invention, there is provided a polyolefin-polystyrene multi-block copolymer satisfying conditions (a) to (c) below determined by gel permeation chromatography (GPC) and condition (d) below in a $^{13}C$ NMR (500 MHz, tetrachloroethane-d2, standard material TMS) spectrum:

(a) a weight average molecular weight is 50,000 g/mol to 150,000 g/mol;
(b) a molecular weight distribution is 1.5 to 3.0;
(c) a Gaussian function modeled from a graph in which the x-axis is logMw and the y-axis is dw/dlogMw with respect to the measurement result of gel permeation chromatography is expressed by Equation 1 below, wherein, in Equation 1 below, each constant value satisfies 0.006 < A < 0.04, 4.6 < B < 5.0, 0.9 < C < 1, and 0.5 < D < 0.9; and
(d) a polyolefin block contained in the polyolefin-polystyrene multi-block copolymer includes at least one branch-point carbon atom, wherein the branch-point carbon atom shows a peak of 36-40 ppm, and the terminal carbon atom of the branched chain from the branch-point shows a peak of 13-15 ppm.

[Equation 1]

$$\frac{dw}{dlogMw} = A + \frac{Cexp\left(\frac{-4ln(2)(logMw - B)^2}{D^2}\right)}{D\sqrt{\frac{\pi}{4ln(2)}}}$$

(In Equation 1 above, Mw represents a weight average molecular weight of the polyolefin-polystyrene multi-block copolymer.)

## ADVANTAGEOUS EFFECTS

The polyolefin-polystyrene multi-block copolymer provided by the present invention has excellent mechanical properties such as tensile strength, elongation at break, and modulus, thereby being used in various industrial applications.

## BRIEF DESCRIPTION OF THE DRAWINGS

FIG. 1 shows $^{1}H$ NMR and $^{13}C$ NMR spectra of a ligand compound according to an embodiment of the present invention;
FIG. 2 shows $^{1}H$ NMR and $^{13}C$ NMR spectra of a transition metal compound according to an embodiment of the present invention;
FIG. 3 is a graph illustrating a polyolefin-polystyrene multi-block copolymer according to an embodiment of the present invention expressed by Equation 1; and
FIG. 4 shows a $^{13}C$ NMR spectrum of a polyolefin-polystyrene multi-block copolymer according to an embodiment of the present invention.

## MODE FOR CARRYING OUT THE INVENTION

Hereinafter, the present invention will be described in more detail to aid in understanding the present invention.
As used herein, the term "composition" includes reaction products and decomposition products formed from materials of the composition as well as a mixture of materials including the composition.
As used herein, the term "polymer" refers to a polymer compound prepared by polymerizing monomers whether the monomers are the same or different types. As such, the common term "polymer" encompasses the term "homopolymer" commonly used to refer to a polymer prepared from only one type of monomer, and the term "interpolymer" as defined below.

As used herein, the term "interpolymer" refers to a polymer prepared by the polymerization of at least two different types of monomers. As such, the common term "interpolymer" includes a copolymer commonly used to refer to a polymer prepared from two different types of monomers and a polymer prepared from two or more different types of monomers.

Hereinafter, the present invention will be described in detail.

**Polyolefin-polystyrene Multi-block Copolymer**

A polyolefin-polystyrene multi-block copolymer of the present invention is characterized by satisfying conditions (a) to (c) below measured by gel permeation chromatography (GPC) and condition (d) below in a $^{13}C$ NMR (500 MHz, tetrachloroethane-d2, standard material TMS) spectrum:

(a) a weight average molecular weight is 50,000 g/mol to 150,000 g/mol;
(b) a molecular weight distribution is 1.5 to 3.0;
(c) a Gaussian function modeled from a graph in which the x-axis is logMw and the y-axis is dw/dlogMw with respect to the measurement result of gel permeation chromatography is expressed by Equation 1 below, wherein, in Equation 1 below, each constant value satisfies 0.006 < A < 0.04, 4.6 < B < 5.0, 0.9 < C < 1, and 0.5 < D < 0.9; and
(d) a polyolefin block contained in the polyolefin-polystyrene multi-block copolymer includes at least one branch-point carbon atom, wherein the branch-point carbon atom shows a peak of 36-40 ppm, and the terminal carbon atom of the branched chain from the branch-point shows a peak of 13-15 ppm.

[Equation 1]

$$\frac{dw}{dlogMw} = A + \frac{Cexp(\frac{-4ln(2)(logMw - B)^2}{D^2})}{D\sqrt{\frac{\pi}{4ln(2)}}}$$

(In Equation 1 above, Mw represents a weight average molecular weight of the polyolefin-polystyrene multi-block copolymer.)

The polyolefin-polystyrene multi-block copolymer of the present invention is produced by using a specific transition metal compound having a novel structure as a catalyst as described below, and is characterized in that a weight average molecular weight, which is a critical factor for determining physical properties of the copolymer, satisfies Equation 1 to have a specific distribution of the weight average molecular weight and a molecular weight distribution value, thereby exhibiting excellent tensile properties (e.g., tensile strength, elongation, modulus, etc.).

With respect to the condition (a), the weight average molecular weight of the polyolefin-polystyrene multi-block copolymer may be 50,000 g/mol to 150,000 g/mol, and particularly, 60,000 g/mol to 120,000 g/mol, or 70,000 g/mol to 120,000 g/mol, or 70,000 g/mol to 100,000 g/mol.

With respect to the condition (b), the molecular weight distribution of the polyolefin-polystyrene multi-block copolymer may be 1.5 to 3.0, and particularly, 1.6 to 2.3, or 1.6 to 2.2.

The weight average molecular weight and number average molecular weight each are a polystyrene-conversion molecular weight analyzed by gel permeation chromatography (GPC), and the molecular weight distribution is calculated from the ratio of (weight average molecular weight)/(number average molecular weight).

As described below, Equation 1 of the condition (c) represents a Gaussian distribution, the Constants B to D included therein are each used as a constant value expressing the weight average molecular weight and molecular weight distribution of the copolymer, and the copolymer of the present invention satisfies the numerical range of A to D above, and together the weight average molecular weight and molecular weight distribution value of the conditions (a) and (b).

With respect to the condition (c), when Equation 1 above is deduced from a Gaussian function modeled from a graph in which the x-axis is logMw and the y-axis is dw/dlogMw with respect to the measurement result of gel permeation chromatography, wherein, each constant value included in Equation 1 satisfies 0.006 < A < 0.04, 4.6 < B < 5.0, 0.9 < C < 1, and 0.5 < D < 0.9. Particularly, the constant A may be more than 0.006, more than 0.007, less than 0.040, or less than 0.035, the constant B may be more than 4.6, less than 5.0, or less than 4.9, the constant C may be more than 0.90, more than 0.91, less than 1.00, or less than 0.99, and the constant D may be more than 0.5, more than 0.6, less than 0.9, or less than 0.8.

As described above, Equation 1 above represents a differential molecular weight distribution curve in which the horizontal axis represents "(log(Mw))" which is a logarithm of the weight average molecular weight (Mw) and the vertical

axis represents "dw/dlog(Mw)" which is a value obtained by differentiating the concentration fraction (w) by the logarithm (log(Mw)) of the weight average molecular weight, which is obtained by measuring by gel permeation chromatography in terms of polystyrene standard, and this may be considered to represent a weight fraction of a polymer having a corresponding molecular weight according to the logarithm of the weight average molecular weight.

That is, the Gaussian function modeled from the graph in which the x-axis is logMw and the y-axis is dw/dlogMw is expressed by Equation 1 above, and it has been newly found that each of the constants A to D is calculated to fall within a specific range.

In Equation 1 above, the constants A to D are constants representing the curve represented by the Gaussian distribution, and show the height of the distribution curve, the width of the half value of the maximum peak, and the center position represented by the maximum peak. More particularly, the constant A included in the Gaussian distribution represents a y-intercept, and the constant C represents an arithmetic meaning of a graph area. In addition, the constants B and D represent physical properties of the copolymer corresponding to the weight average molecular weight and molecular weight distribution.

With respect to the condition (d), the polyolefin block contained in the polyolefin-polystyrene multi-block copolymer includes at least one branch-point carbon atom, wherein the branch-point carbon atom shows a peak of 36-40 ppm, and the terminal carbon atom of the branched chain from the branch-point shows a peak of 13-15 ppm.

Particularly, the branch-point carbon atom may be 36.0 ppm or more, 37.0 ppm or more, or 37.5 ppm or more, and may be 40.0 ppm or less, 39.0 ppm or less, or 38.5 ppm or less. In addition, the terminal carbon atom of the branched chain from the branch-point carbon atom may be 13.0 ppm or more, or 13.5 ppm or more, and may be 15.0 ppm or less, or 14.5 ppm or less.

As described above, the polyolefin-polystyrene multi-block copolymer of the present invention has long branch chains in the polyolefin block, which can be identified as a unique peak region in $^{13}C$ NMR of the terminal carbon atom of the branched chain from the branch-point carbon atom. Therefore, the polyolefin-polystyrene multi-block copolymer of the present invention exhibits excellent physical properties such as high impact strength compared to a conventional copolymer.

The polyolefin-polystyrene multi-block copolymer may be at least one selected from the group consisting of a polystyrene-poly(ethylene-co-propylene)-polystyrene block copolymer, a polystyrene-poly(ethylene-co-1-butene)-polystyrene block copolymer, a polystyrene-poly(ethylene-co-1-pentene)-polystyrene block copolymer, a polystyrene-poly(ethylene-co-1-hexene)-polystyrene block copolymer, a polystyrene-poly(ethylene-co-1-heptene)-polystyrene block copolymer, and a polystyrene-poly(ethylene-co-1-octene)-polystyrene block copolymer.

In addition, the polyolefin-polystyrene multi-block copolymer of the present invention may have the following tensile properties by satisfying the conditions (a) to (d).

Particularly, the polyolefin-polystyrene multi-block copolymer may have a tensile strength of 10 MPa to 100 MPa, particularly 10 MPa to 50 MPa, and more particularly 20 MPa to 40 MPa, the tensile strength showing the maximum tensile stress when a material is pulled and broken for a load to be uniformly applied to the cross sectional area thereof.

The polyolefin-polystyrene multi-block copolymer may have an elongation at break of 500% to 3,000%, 600% to 2,800%, or 800% to 2,500%, the elongation at break being shown as a percentage of the ratio of increased length to initial length, which is a strain along the direction of elongation caused by a tensile force.

The polyolefin-polystyrene multi-block copolymer has a 300% modulus of 2.1 MPa to 10.0 MPa, the 300% modulus being a tensile stress at 300% elongation and is shown as an average force per unit area, and has excellent strength and elasticity, thereby having excellent toughness.

The tensile properties such as tensile strength, elongation at break, and 300% modulus may be measured according to the standard measurement ASTM D412 method.

As such, the polyolefin-polystyrene multi-block copolymer of the present invention satisfies the above-mentioned ranges of tensile strength, elongation at break, and 300% modulus, exhibits excellent physical properties compared to the conventional copolymer, and it is possible to produce a copolymer exhibiting specific physical properties according to its use by controlling the length and content of the polyolefin block using the production method provided in the present invention.

In addition, the polyolefin block of the copolymer of the present invention may include at least one repeating unit represented by Formula a below:

[Formula a]

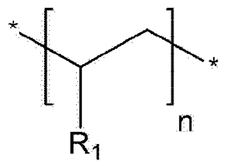

In Formula a above,

$R_1$ is hydrogen, alkyl having 1 to 20 carbon atoms, alkyl having 1 to 20 carbon atoms substituted with silyl, arylalkyl having 7 to 20 carbon atoms, or arylalkyl having 7 to 20 carbon atoms substituted with silyl,
n may be an integer of 1 to 10,000.
In addition, according to an embodiment of the present invention, $R_1$ above may be hydrogen or alkyl having 3 to 20 carbon atoms.
In addition, according to an embodiment of the present invention, $R_1$ above may be hydrogen or alkyl having 3 to 12 carbon atoms, and particularly, $R_1$ above may be hydrogen or alkyl having 4 to 12 carbon atoms.
In addition, n above may be an integer of 10 to 10,000, and particularly, an integer of 500 to 7,000.

Meanwhile, "*" in the formulae shown in the specification of the present invention represents a connecting part, which is a terminal part of a repeating unit.
When the polyolefin block includes at least two repeating units represented by Formula a above, the polyolefin block may include a repeating unit represented by Formula b below:

[Formula b]

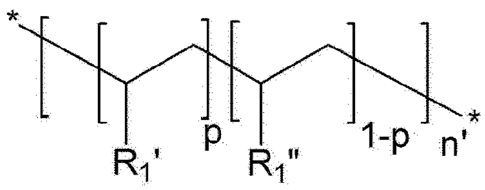

In Formula b above,

$R_1$' and $R_1$" are each independently hydrogen, alkyl having 1 to 20 carbon atoms, alkyl having 1 to 20 carbon atoms substituted with silyl, arylalkyl having 7 to 20 carbon atoms, or arylalkyl having 7 to 20 carbon atoms substituted with silyl, wherein $R_1$' and $R_1$" above are different from each other,

$$0<p<1,$$

and
n' may be an integer of 1 to 10,000.

In addition, according to an embodiment of the present invention, $R_1$' and $R_1$" above may be each independently hydrogen or alkyl having 3 to 20 carbon atoms, particularly may be each independently hydrogen or alkyl having 3 to 12 carbon atoms, and more particularly may be each independently hydrogen or alkyl having 4 to 12 carbon atoms.
In addition, particularly, n' may be an integer of 10 to 10,000, and more particularly, an integer of 500 to 7,000.
According to an embodiment of the present invention, in Formula b above, one among $R_1$' and $R_1$" may be hydrogen, and the other may be a substituent other than hydrogen among the above-mentioned substituents.
That is, when the polyolefin block includes at least two repeating units represented by Formula a above, a structure in which $R_1$ is hydrogen and a structure in which $R_1$ is alkyl having 1 to 20 carbon atoms, alkyl having 1 to 20 carbon atoms substituted with silyl, arylalkyl having 7 to 20 carbon atoms, or arylalkyl having 7 to 20 carbon atoms substituted with silyl other than hydrogen may be randomly connected, and particularly, a structure in which $R_1$ is hydrogen and a structure in which $R_1$ is alkyl having 3 to 20 carbon atoms other than hydrogen may be randomly connected.

In addition, more particularly, the polyolefin block may be the one that a structure in which $R_1$ is hydrogen and a structure in which $R_1$ is alkyl having 3 to 12 carbon atoms in Formula a above are randomly connected, and still more particularly, the polyolefin block may be the one that a structure in which $R_1$ is hydrogen and a structure in which $R_1$ is alkyl having 4 to 12 carbon atoms in Formula a above are randomly connected.

When the polyolefin block includes at least two repeating units represented by Formula a above, the polyolefin block may include a structure in which $R_1$ is hydrogen and a structure in which $R_1$ is a substituent other than hydrogen in Formula a above, in a weight ratio of 30:90 to 70:10, particularly, in a weight ratio of 40:60 to 60:40, and more particularly in a weight ratio of 45:75 to 55:25.

When the polyolefin block includes a structure in which $R_1$ is hydrogen and a structure in which $R_1$ is a substituent other than hydrogen in the above-mentioned range, the prepared block copolymer includes a branch to an appropriate degree within the structure, and thus may have a high modulus value of 300% and an elongation at break to exhibit excellent elastic properties, and may exhibit a wide molecular weight distribution together with a high molecular weight to have excellent processability.

In addition, a first polystyrene block of the copolymer of the present invention may include at least one repeating unit represented by Formula c below:

[Formula c]

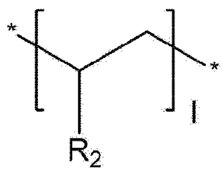

In Formula c above,

$R_2$ is aryl having 6 to 20 carbon atoms, or aryl having 6 to 20 carbon atoms which is substituted with halogen, alkyl having 1 to 12 carbon atoms, cycloalkyl having 3 to 12 carbon atoms, alkoxy having 1 to 8 carbon atoms, or aryl having 6 to 12 carbon atoms,
l is independently an integer of 10 to 1,000.
$R_2$ above may be phenyl, or phenyl which is unsubstituted or substituted by halogen, alkyl having 1 to 8 carbon atoms, cycloalkyl having 3 to 12 carbon atoms, alkoxy having 1 to 8 carbon atoms, or aryl having 6 to 12 carbon atoms, and $R_2$ may be phenyl.
l above may be an integer of 10 to 1,000, and particularly an integer of 50 to 700, and when l is within the above range, the polyolefin-polystyrene block copolymer prepared by the production method may have an appropriate level of viscosity.

In particular, the copolymer of the present invention may form a composite block represented by Formula d below which is formed by combining the polyolefin block including a repeating unit represented by Formula a above and the first polystyrene block including a repeating unit represented by Formula c above:

[Formula d]

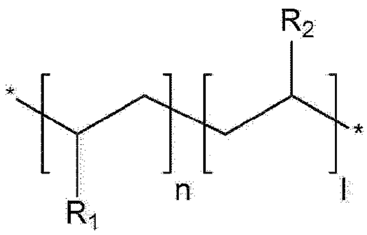

In Formula d,

$R_1$ is hydrogen, alkyl having 1 to 20 carbon atoms, alkyl having 1 to 20 carbon atoms substituted with silyl, arylalkyl having 7 to 20 carbon atoms, or arylalkyl having 7 to 20 carbon atoms substituted with silyl,
$R_2$ is aryl having 6 to 20 carbon atoms, or aryl having 6 to 20 carbon atoms which is substituted with halogen, alkyl having 1 to 12 carbon atoms, cycloalkyl having 3 to 12 carbon atoms, alkoxy having 1 to 8 carbon atoms, or aryl having

6 to 12 carbon atoms,
l is an integer of 10 to 1,000, and
n is an integer of 1 to 10,000.

In addition, in Formula d above, each of $R_1$, $R_2$, l and n is the same as defined in Formula a and Formula c above.

In addition, when the polyolefin block includes the repeating unit represented by Formula a above, the composite block formed by combining the first polystyrene block including the repeating unit represented by Formula c above may be represented by Formula e below:

[Formula e]

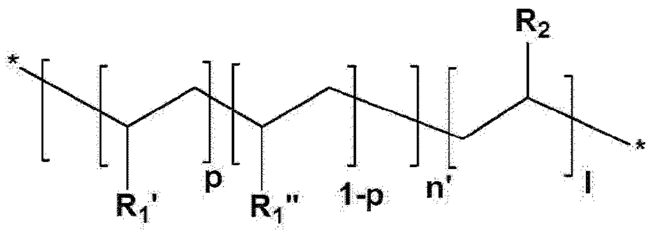

In Formula e above, each of $R_1'$, $R_1''$, p, l and n' above is the same as defined in Formula a or c above.

In addition, when the copolymer of the present invention is prepared, a styrene monomer may form a polyolefin block, and together the styrene monomer may be bonded and polymerized to an organozinc compound to form a separate styrene polymer block. The separate styrene polymer block herein is referred to as a second polystyrene block. The second polystyrene block may include a repeating unit represented by Formula f below:

[Formula f]

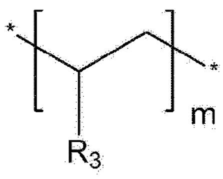

In Formula f above,

$R_3$ is aryl having 6 to 20 carbon atoms, or aryl having 6 to 20 carbon atoms which is substituted with halogen, alkyl having 1 to 12 carbon atoms, cycloalkyl having 3 to 12 carbon atoms, alkoxy having 1 to 8 carbon atoms, or aryl having 6 to 12 carbon atoms, and
m is independently an integer of 10 to 1,000.
In addition, according to an embodiment of the present invention, $R_3$ above may be phenyl, or phenyl which is unsubstituted or substituted by halogen, alkyl having 1 to 8 carbon atoms, cycloalkyl having 3 to 12 carbon atoms, alkoxy having 1 to 8 carbon atoms, or aryl having 6 to 12 carbon atoms, and $R_3$ may be phenyl.
m above may be an integer of 10 to 1,000, and particularly, an integer of 50 to 700.

That is, the copolymer of the present invention may include the first polystyrene block including the repeating unit represented by Formula c above and the second polystyrene block including the repeating unit represented by Formula f above.

Accordingly, the block copolymer composition may include a triblock copolymer including the polyolefin block including at least one repeating unit represented by Formula a below; the first polystyrene block including the repeating unit represented by Formula c below; and the second polystyrene block including the repeating unit represented by Formula f below:

[Formula a]

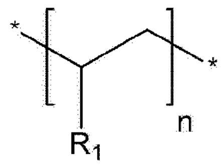

[Formula c]

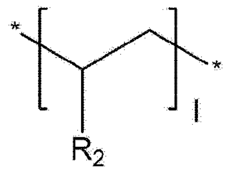

[Formula f]

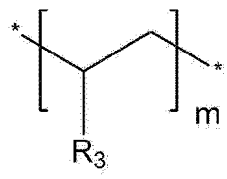

In Formulae above,

$R_1$ is hydrogen, alkyl having 1 to 20 carbon atoms, alkyl having 1 to 20 carbon atoms substituted with silyl, arylalkyl having 7 to 20 carbon atoms, or arylalkyl having 7 to 20 carbon atoms substituted with silyl,
$R_2$ and $R_3$ are aryl having 6 to 20 carbon atoms, or aryl having 6 to 20 carbon atoms which is substituted with halogen, alkyl having 1 to 12 carbon atoms, cycloalkyl having 3 to 12 carbon atoms, alkoxy having 1 to 8 carbon atoms, or aryl having 6 to 12 carbon atoms,
n is an integer of 10 to 10,000, and
l and m are each independently an integer of 10 to 1,000.

Also, in Formulae above, $R_1$, $R_2$, $R_3$, n, l and m are the same as defined in Formulae a, c and f.

**Method for Producing Polyolefin-polystyrene Multi-block Copolymer**

A method for producing a polyolefin-polystyrene multi-block copolymer characterized by including the steps of: (S1) polymerizing olefin monomers using an organozinc compound as a chain transfer agent in the presence of a catalyst composition including a transition metal compound represented by Formula 1 below to form a polyolefin block; and (S2) anionically polymerizing the polyolefin block with a styrene monomer in the presence of an alkyl lithium compound containing a silicon atom and a triamine compound to form a polystyrene block.

The production method of the present invention, as described below, forms a polyolefin chain by using a transition metal compound represented by Formula 1, which is efficiently utilized in the polymerization of olefin monomers, as a catalyst, and then continuously performs styrene anion-polymerization to form a polyolefin-polystyrene block, thereby forming a polyolefin-polystyrene multi-block copolymer having a specific height and a half-width of the tanδ peak.

Step (S1)

The step (S1) is a step of polymerizing olefin monomers using an organozinc compound as a chain transfer agent in the presence of a catalyst composition including a transition metal compound represented by Formula 1 below to form a polyolefin block:

[Formula 1]

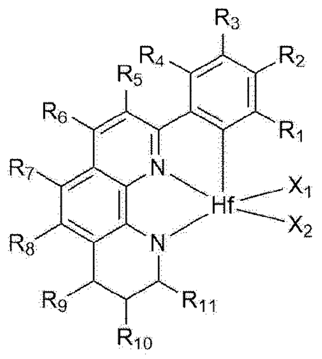

In Formula 1 above,

$R_1$ to $R_{11}$ are each independently hydrogen, an alkyl group having 1 to 20 carbon atoms, an alkenyl group having 2 to 20 carbon atoms, an alkynyl group having 2 to 20 carbon atoms, a cycloalkyl group having 3 to 20 carbon atoms, an aryl group having 6 to 20 carbon atoms, an arylalkoxy group having 7 to 20 carbon atoms, an alkoxy group having 1 to 20 carbon atoms, an alkylaryl group having 7 to 20 carbon atoms, an alkylsilyl group having 1 to 20 carbon atoms, or an arylalkyl group having 7 to 20 carbon atoms,

Adjacent two or more among $R_1$ to $R_{11}$ may be bonded to form an aliphatic ring having 3 to 20 carbon atoms or an aromatic ring having 6 to 20 carbon atoms, and

$X_1$ and $X_2$ are each independently hydrogen, halogen, a hydroxyl group, an amino group, a thio group, a silyl group, a cyano group, a nitro group, an alkyl group having 1 to 20 carbon atoms, an alkenyl group having 2 to 20 carbon atoms, an alkynyl group having 2 to 20 carbon atoms, a cycloalkyl group having 3 to 20 carbon atoms, an aryl group having 6 to 20 carbon atoms, an alkylaryl group having 7 to 20 carbon atoms, an arylalkyl group having 7 to 20 carbon atoms, a heteroaryl group having 5 to 20 carbon atoms, an alkoxy group having 1 to 20 carbon atoms, an aryloxy group having 6 to 20 carbon atoms, an alkylamino group having 1 to 20 carbon atoms, an arylamino group having 6 to 20 carbon atoms, an alkylthio group having 1 to 20 carbon atoms, an arylthio having 6 to 20 carbon atoms, an alkylsilyl group having 1 to 20 carbon atoms, or an arylsilyl group having 6 to 20 carbon atoms.

When a polymerization reaction is performed in the presence of an excess of a chain transfer agent (e.g., $(Et)_2Zn$) as compared with a catalyst, olefin polymer chains can be uniformly grown from dialkyl zinc by causing rapid alkyl exchange between zinc (Zn) and hafnium (Hf) to effect living polymerization, which is referred to as coordinative chain transfer polymerization (CCTP). Since conventional used metallocene catalysts have not been capable of living polymerization through a β-elimination process, a few catalysts known to be applicable to the CCTP have been only capable of single polymerization of ethylene, and it has been very difficult to perform copolymerization of ethylene and alpha-olefin through the CCTP, it has been very difficult to perform living polymerization through the CCTP using a general transition metal compound as a catalyst and prepare a block copolymer.

On the other hand, the hafnium compound represented by Formula 1 above is an $[N^{amido},N,C^{aryl}]HfMe_2$-type complex containing a 1,2,3,4-tetrahydro-1,10-phenanthroline backbone and a Hf-C(aryl) bond, which shows excellent alpha-olefin incorporation ability in the polymerization of ethylene and alpha-olefin, and in particular, the molecular weight of the olefin polymer or the content of the alpha-olefin varies depending on the content of the chain transfer agent, which indicates that the compound is successfully used in the CCTP and the β-removal reaction hardly occurred and seemed to be negligible. That is, the copolymerization of ethylene and an alpha-olefin monomer may be conducted by the CCTP using a hafnium compound represented by Formula 1 above to perform living polymerization, and the block copolymer having various block compositions may be successfully produced.

In addition, the CCTP using the hafnium compound may be converted into an anionic styrene polymerization reaction to synthesize a polyolefin-polystyrene block copolymer. As such, the hafnium compound may be usefully used as a catalyst for preparing an olefin polymer, which is a unique feature that may be achieved with a novel structure of the hafnium compound represented by Formula 1 above.

Particularly, in Formula 1 above, $R_1$ to $R_{11}$ above may be each independently hydrogen, an alkyl group having 1 to 20 carbon atoms, a cycloalkyl group having 3 to 20 carbon atoms, or an aryl group having 6 to 20 carbon atoms, preferably, $R_1$ to $R_{10}$ may be hydrogen, and together $R_{11}$ may be hydrogen, an alkyl group having 1 to 20 carbon atoms, or an aryl group having 6 to 20 carbon atoms, and more preferably, $R_1$ to $R_{10}$ are hydrogen, and together $R_{11}$ may be hydrogen or an alkyl group having 1 to 20 carbon atoms.

Alternatively, in Formula 1 above, $R_1$ to $R_{11}$ above may be each independently hydrogen, an alkyl group having 1 to 20 carbon atoms, or an aryl group having 6 to 20 carbon atoms, wherein $R_3$ and $R_4$ may be bonded to form an aromatic ring (e.g., a benzene ring) having 5 to 20 carbon atoms, and preferably $R_3$ and $R_4$ may be bonded to form a benzene ring and together $R_{11}$ may be an alkyl group having 1 to 20 carbon atoms, or an aryl group having 6 to 20 carbon atoms.

Alternatively, in Formula 1 above, $R_1$, $R_2$, and $R_5$ to $R_{10}$ above may be hydrogen, $R_3$, $R_4$, and $R_{11}$ above may be each independently hydrogen, or an alkyl group having 1 to 20 carbon atoms, and $R_3$ and $R_4$ above may be bonded to form an aromatic ring (e.g., a benzene ring) having 5 to 20 carbon atoms.

Meanwhile, $X_1$ and $X_2$ above may be each independently hydrogen, an alkyl group having 1 to 20 carbon atoms, a cycloalkyl group having 3 to 20 carbon atoms, or an aryl group having 6 to 20 carbon atoms, and preferably, each independently an alkyl group having 1 to 20 carbon atoms, and $X_1$ and $X_2$ above may be the same as each other.

As used herein, the term "alkyl" refers to a linear or branched hydrocarbon residue.

As used herein, the term "alkenyl" refers to a linear or branched alkenyl group.

As used herein, the term "aryl" is preferably an aryl group having 6 to 20 carbon atoms, and particularly, may include phenyl, naphthyl, anthracenyl, pyridyl, dimethylanilinyl, and anisolyl.

As used herein, the term "alkylaryl" refers to an aryl group substituted by the alkyl group.

As used herein, the term "arylalkyl" refers to an alkyl group substituted by the aryl group.

As used herein, the term "alkylsilyl" may be silyl substituted with alkyl having 1 to 20 carbon atoms, for example, may be trimethylsilyl or triethylsilyl.

As used herein, the term "alkylamino" refers to an amino group substituted by the alkyl group, and may include, a dimethylamino group or a diethylamino group.

As used herein, the term "hydrocarbyl", unless otherwise stated, refers to a monovalent hydrocarbon group having 1 to 20 carbon atoms, which is composed only of carbon and hydrogen regardless of the structure thereof, such as alkyl, aryl, alkenyl, alkynyl, cycloalkyl, alkylaryl or arylalkyl.

More particularly, the hafnium compound represented by Formula 1 above may be a hafnium compound represented by Formula 1a or 1b below:

[Formula 1a]

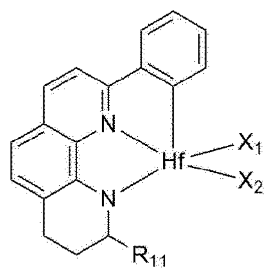

[Formula 1b]

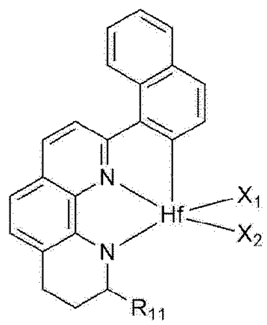

In Formulae 1a and 1b above,

$R_{11}$ is hydrogen, an alkyl group having 1 to 20 carbon atoms, an alkenyl group having 2 to 20 carbon atoms, an alkynyl group having 2 to 20 carbon atoms, a cycloalkyl group having 3 to 20 carbon atoms, an aryl group having 6 to 20 carbon atoms, an arylalkoxy group having 7 to 20 carbon atoms, an alkoxy group having 1 to 20 carbon atoms, an alkylaryl group having 7 to 20 carbon atoms, an alkylsilyl group having 1 to 20 carbon atoms, or an arylalkyl group having 7 to 20 carbon atoms, and

$X_1$ and $X_2$ are each independently hydrogen, halogen, a hydroxyl group, an amino group, a thio group, a silyl group, a cyano group, a nitro group, an alkyl group having 1 to 20 carbon atoms, an alkenyl group having 2 to 20 carbon atoms, an alkynyl group having 2 to 20 carbon atoms, a cycloalkyl group having 3 to 20 carbon atoms, an aryl group having 6 to 20 carbon atoms, an alkylaryl group having 7 to 20 carbon atoms, an arylalkyl group having 7 to 20 carbon atoms, a heteroaryl group having 5 to 20 carbon atoms, an alkoxy group having 1 to 20 carbon atoms, an aryloxy group having 6 to 20 carbon atoms, an alkylamino group having 1 to 20 carbon atoms, an arylamino group having 6 to 20 carbon atoms, an alkylthio group having 1 to 20 carbon atoms, an arylthio having 6 to 20 carbon atoms, an alkylsilyl group having 1 to 20 carbon atoms, or an arylsilyl group having 6 to 20 carbon atoms.

The hafnium compound may be represented by any one among Formulae 1-1 to 1-5 below and all the hafnium compounds corresponding to Formula 1 are included.

[Formula 1-1]

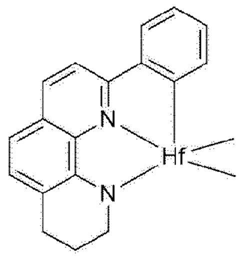

[Formula 1-2]

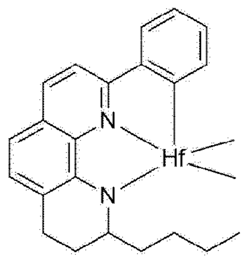

[Formula 1-3]

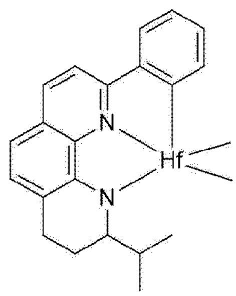

[Formula 1-4]

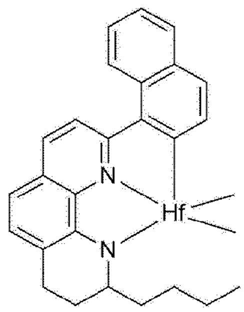

[Formula 1-5]

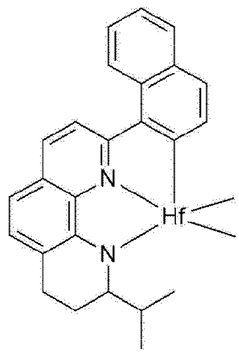

The hafnium compound may be prepared by including the step of reacting a compound represented by Formula 2 below and a compound represented by Formula 3 below:

[Formula 2]

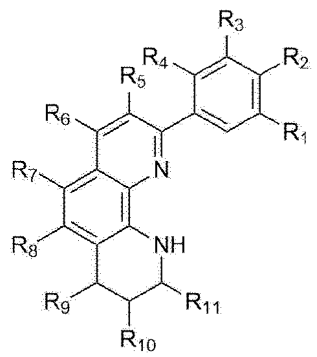

[Formula 3] $Hf(X_1X_2)2$

In Formulae above,

$R_1$ to $R_{11}$, and $X_1$ and $X_2$ are the same as defined above.

Meanwhile, when preparing the hafnium compound represented by Formula 1 above, the step of preparing the ligand compound may be performed differently according to the final structure of the prepared hafnium compound, as follows.

For example, when $R_3$ and $R_4$ do not form a ring and $R_{11}$ is a hydrogen atom in the ligand compound, the ligand compound may be prepared by hydrogenating under a ruthenium catalyst as follows, and then reacted with a compound represented by Formula 3, which is a hafnium precursor, to prepare a hafnium compound.

[Reaction Formula 1]

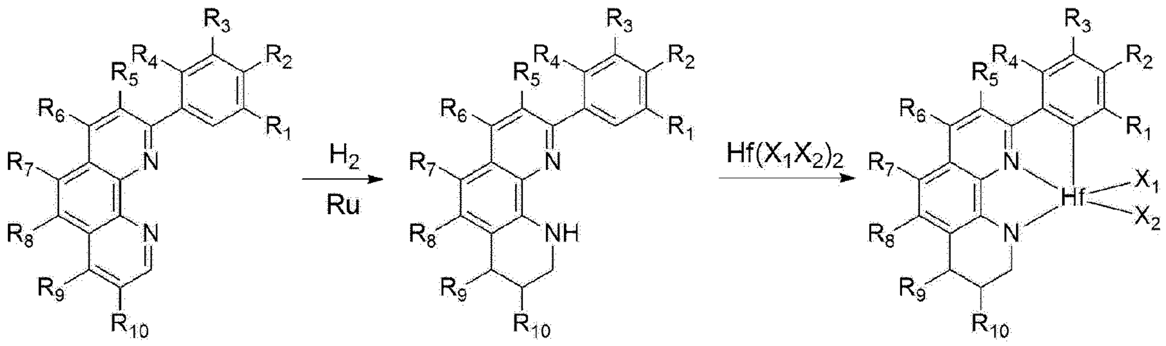


In addition, when $R_3$ and $R_4$ do not form a ring and $R_{11}$ is a substituent other than a hydrogen atom in the structure of the ligand compound, $R_{11}$ is first introduced using an organolithium compound and then hydrogenated under a ruthenium catalyst to prepare a ligand compound as shown in Reaction Formula 2 below:

[Reaction Formula 2]

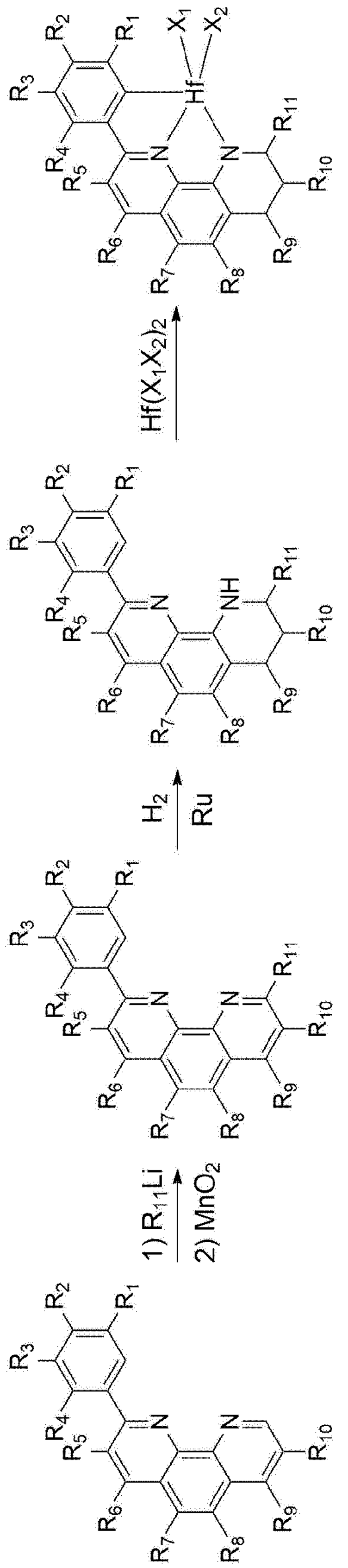


In addition, when $R_3$ and $R_4$ are bounded to each other to form an aromatic ring having 5 to 20 carbon atoms and $R_{11}$ is a substituent other than a hydrogen atom in the structure of the ligand compound, $R_{11}$ may be first introduced using an organolithium compound, and then the ligand compound may be prepared by hydrogenation under a Pd/C catalyst in

order to prevent the hydrogenation of the aromatic ring such as a naphthyl group, as follows:

[Reaction Formula 3]

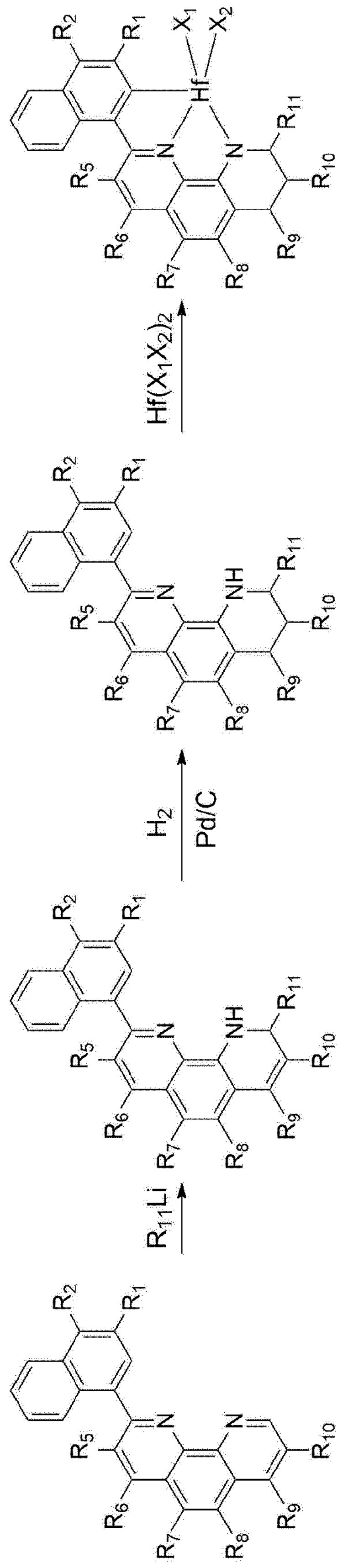


That is, the hafnium compound may be prepared by preparing a ligand compound by alkylation and hydrogenation under appropriate reagents and reaction conditions for the compound that is a precursor of the ligand compound

and introducing hafnium thereto, and specific types of the alkylation reagent, reaction temperature, and pressure may be appropriately changed by those skilled in the art in consideration of the structure of the final compound and experimental conditions.

The organozinc compound is a substance used as a chain transfer agent to allow chain transfer to be performed during production in the polymerization to produce a copolymer, and particularly, may be a compound represented by Formula 4 below:

[Formula 4]

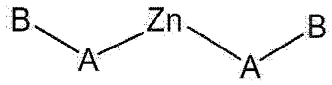

In Formula 4 above,

A is alkylene having 1 to 20 carbon atoms, arylene having 6 to 20 carbon atoms, or arylene having 6 to 20 carbon atoms substituted with halogen, alkyl having 1 to 12 carbon atoms, cycloalkyl having 3 to 12 carbon atoms, alkoxy having 1 to 8 carbon atoms, or aryl having 6 to 12 carbon atoms, and
B is arylene having 6 to 12 carbon atoms substituted with alkenyl having 2 to 12 carbon atoms.

In addition, A above may be alkylene having 1 to 12 carbon atoms, arylene having 6 to 12 carbon atoms, or arylene having 6 to 12 carbon atoms substituted with halogen, alkyl having 1 to 12 carbon atoms, cycloalkyl having 3 to 12 carbon atoms, alkoxy having 1 to 8 carbon atoms, or aryl having 6 to 12 carbon atoms, and
B above may be arylene having 6 to 12 carbon atoms substituted with alkenyl having 2 to 8 carbon atoms.

Formula 4 above may have a structure having double bonds at both ends thereof, for example, when B above is arylene substituted with alkenyl, the arylene may be connected to A above, and the double bond of the alkenyl substituted to the arylene may be located at the outermost portion in Formula 4 above.

When the organozinc compound is reacted with at least one type of olefin monomers in the presence of the catalyst composition, the polymerization may be effected while the olefin monomer is inserted between zinc (Zn) and the organic group (A) of the organozinc compound.

The organozinc compound may be mixed in an amount of 1 to 200 equivalents based on 1 equivalent of the transition metal compound of Formula 1 above, and particularly, may be mixed in an amount of 10 to 100 equivalents based on 1 equivalent of the transition metal compound of Formula 1 above.

The organozinc compound does not contain impurities such as THF and a large amount of magnesium salt, and thus can be provided in high purity, and therefore can be used as a chain transfer agent and is advantageous to be used in olefin polymerization.

The catalyst composition may further include a cocatalyst compound. In this case, the cocatalyst compound may serve to activate the transition metal compound represented by Formula 1, and any one known in the art may be used as a cocatalyst, for example, at least one selected from among Formulae 5 to 7 below may be used as the cocatalyst.

[Formula 5] $-[Al(R_a)-O]_m-$

[Formula 6] $D(R_a)_3$

[Formula 7] $[L-H]^+[Z(A)_4]^-$ or $[L]^+[Z(A)_4]^-$

In Formulae above,

$R_a$ is each independently a halogen radical, a hydrocarbyl radical having 1 to 20 carbon atoms, or a hydrocarbyl radical having 1 to 20 carbon atoms substituted with halogen,
m is an integer of 2 or more,
D is aluminum or boron,
L is a neutral or cationic Lewis acid,
Z is a Group 13 element,
A is each independently aryl having 6 to 20 carbon atoms, in which at least one hydrogen atom may be substituted with a substituent, or alkyl having 1 to 20 carbon atoms, and

The substituent of A above is halogen, hydrocarbyl having 1 to 20 carbon atoms, alkoxy having 1 to 20 carbon atoms, or aryloxy having 6 to 20 carbon atoms.

The compound represented by Formula 5 above is alkylaluminoxane. Preferred examples include methylaluminoxane, ethylaluminoxane, isobutylaluminoxane, and butylaluminoxane, and particularly preferred compounds are methylaluminoxane.

The compound represented by Formula 6 above includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, triphenylaluminum, tri-p-tolylaluminum, dimethylaluminum methoxide, dimethylaluminum ethoxide, trimethylboron, triethylboron, triisobutylboron, tripropylboron, and tributylboron, and particularly preferred compounds are selected from among trimethylaluminum, triethylaluminum, and triisobutylaluminum.

For example, when Z is boron, examples of the compound represented by Formula 7 above may include dioctadecylmethylammonium tetrakis (pentafluorophenyl) borate $[(C_{18}H_{37})_2N(H)Me]^+[B(C_6F_5)_4]^-$, dioctadecylmethylammonium tetrakis(phenyl)borate, dioctadecylmethylammonium tetrakis[3,5-bis(trifluoromethyl)phenyl]borate, triethylammonium tetraphenylborate, tributylammonium tetraphenylborate, trimethylammonium tetraphenylborate, tripropylammonium tetraphenylborate, trimethylammonium tetra(p-tolyl)borate, trimethylammonium tetra(o,p-dimethylphenyl)borate, tributylammonium tetra(p-trifluoromethylphenyl)borate, tributylammonium tetrapentafluorophenylborate, N,N-diethylanilinium tetraphenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, tripropylammonium tetra(p-tolyl)borate, triethylammonium tetra (o,p-dimethylphenyl) borate, trimethylammonium tetra (p-trifluoromethylphenyl) borate, triphenylcarbonium tetra(p-trifluoromethylphenyl) borate, triphenylcarbonium tetrapentafluorophenylborate, or a combination thereof, and for example, when Z is aluminum, examples of the compound may include triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra (o,p-dimethylphenyl)aluminum, tributylammonium tetra (p-trifluoromethylphenyl) aluminum, trimethylammonium tetra(p-trifluoromethylphenyl) aluminum, tributylammonium tetrapentafluorophenylaluminum, N,N-diethylanilinium tetraphenylaluminum, N,N-diethylanilinium tetrapentafluorophenylaluminum, diethylammonium tetrapentafluorophenylaluminum, triphenylphosphonium tetraphenylaluminum, trimethylphosphonium tetraphenylaluminum, or a combination thereof.

In particular, the cocatalyst used herein may be a compound represented by Formula 7 above, and particularly dioctadecylmethylammonium tetrakis(pentafluorophenyl)borate.

In addition, the cocatalyst used herein may be prepared in an anhydrous hydrocarbon solvent. For example, the hydrocarbon solvent may be at least one selected from the group consisting of butane, pentane, neopentane, hexane, cyclohexane, methylcyclohexane, heptane, octane, benzene, toluene, xylene and ethylbenzene, but is not limited thereto, and any hydrocarbon solvent available in the art may be used in an anhydrous form.

When the cocatalyst is prepared in the presence of an anhydrous hydrocarbon solvent, at least one peak appears each in the range of 1.75 ppm to 1.90 ppm and in the range of 1.90 ppm to 2.00 ppm in the $^1H$ NMR spectrum. This is because protons attached to $\alpha$-carbon adjacent to nitrogen, sulfur, or phosphorus included in L show different peaks. For example, when the compound represented by Formula 1 is $[(C_{18}H_{37})_2N(H)Me]^+[B(C_6F_5)_4]^-$, two protons present in $NCH_2$ may each show different signals in the $^1H$ NMR spectrum thereof.

In addition, the hafnium compound represented by Formula 1 above and the cocatalyst may be used as supported on a carrier. Silica or alumina may be used as the carrier, but is not limited thereto.

Examples of the olefin monomer that is input as a reactant in the step (S1) may include ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, or a monomer formed of a mixture thereof. The olefin monomer may be used alone or in combination of two or more thereof.

The step (S1) may be performed, for example, in a homogeneous solution state. In this case, the hydrocarbon solvent may be used as a solvent or the olefin monomer itself may be used as a medium. Examples of the hydrocarbon solvent may include an aliphatic hydrocarbon solvent having 4 to 20 carbon atoms, and particularly, isobutane, hexane, cyclohexane, and methylcyclohexane. The solvent may be used alone or in combination of two or more thereof.

The polymerization temperature of the step (S1) may vary depending on the reaction material, reaction conditions, etc., but particularly the polymerization may be carried out at 70 °C to 170 °C, particularly, 80 °C to 150 °C, or 90 °C to 120 °C. Within this range, the catalyst may be thermally stable while increasing solubility of the polymer.

The polymerization of the step (S1) may be carried out in a batch, semi-continuous or continuous manner, or may be also carried out in two or more steps having different reaction conditions.

The compound prepared in the above-described step (S1) may serve as a precursor for producing the polyolefin-polystyrene multi-block copolymer of the present invention by the anionic polymerization reaction of the step (S2) described below.

Step (S2)

The step (S2) is a step of producing a polyolefin-polystyrene multi-block copolymer by forming a polystyrene block via anionic polymerization of the polyolefin block and the styrene monomer in the presence of the alkyl lithium compound containing a silicon atom and the triamine compound, followed by the step (S1).

In the step (S2), a styrene monomer may be continuously inserted between zinc-carbon bonds of $(polyolefin)_2Zn$ contained in the compound formed in the above-described step (S1), and simultaneously, a styrene group at a terminal of the compound formed in the step (S1) may participate as a copolymerization site with the styrene monomer and be connected to a polystyrene chain. In addition, the end group of the multi-block copolymer produced through the process may react with water, oxygen, or an organic acid to be readily quenched, and thereby the multi-block copolymer is converted to a polyolefin-polystyrene multi-block copolymer that is industrially useful.

The styrene monomer may be a styrene monomer having 6 to 20 carbon atoms. More particularly, the styrene monomer, such as styrene may include ethylene substituted with an aryl group having 6 to 20 carbon atoms, and ethylene substituted with a phenyl group.

The alkyl lithium compound containing a silicon atom may be a compound represented by Formula 8 below:

[Formula 8] $(CH_3)_3Si(CH_2)Li$

Such alkyl lithium compound containing a silicon atom is readily available as a material widely used as an initiator for the anionic polymerization and therefore is easily utilized in the present invention.

The triamine compound may be a compound represented by Formula 9 below:

[Formula 9]

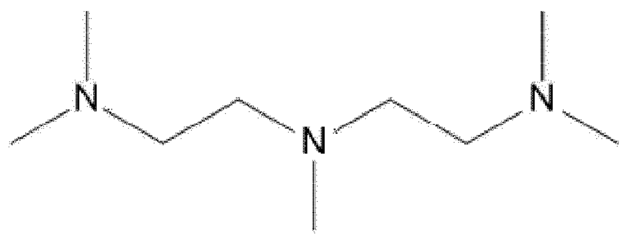

The triamine compound is readily available and inexpensive as a compound used for the purpose of improving reactivity of the alkyl lithium compound as a base or a nucleophile since the triamine compound is readily coordinated to lithium.

The present disclosure can maximize the generation of the polyolefin-polystyrene multi-block copolymer, which is the object of the present invention, while suppressing the production amount of polystyrene homopolymer, polyolefin homopolymer, polyolefin-polystyrene double block copolymer by newly using the compound of Formulae 8 and 9 above (for example, $Me_3SiCH_2Li{\cdot}(PMDETA)$) as an initiator of the step (S2) .

The alkyl lithium compound containing a silicon atom represented by Formula 8 above and the triamine compound represented by Formula 9 above may be mixed in an aliphatic hydrocarbon solvent and then added, or the alkyl lithium compound containing a silicon atom represented by Formula 8 above and the triamine compound represented by Formula 9 above may be sequentially added to a reactor.

The anionic polymerization temperature of the step (S2) may vary depending on the reaction material, reaction conditions, etc., and more particularly, the polymerization may be carried out at 40 °C to 170 °C, 60 °C to 150 °C, or 90 °C to 100 °C.

The anionic polymerization of the step (S2) may be carried out in a batch, semi-continuous or continuous manner, or may be also carried out in two or more steps having different reaction conditions.

The anionic polymerization time of the step (S2) may vary depending on the reaction material, reaction conditions, etc., and particularly may be 0.5-10 hours, 1-8 hours, 2-7 hours, or 4-6 hours. Within this range, it is advantageous to convert a total amount of styrene monomers to be introduced into multi-block copolymers.

Thus, a polyolefin-polystyrene multi-block copolymer is produced by a method of growing a polyolefin chain through olefin polymerization using the organozinc compound represented by Formula 4 and then continuously performing styrene anionic polymerization, thereby efficiently producing a polyolefin-polystyrene multi-block copolymer which has improved physical properties compared to the existing copolymer and is easily used in industrial application.

## Examples

Hereinafter, the present invention will be described in more detail according to the examples.

**<Preparation of Transition Metal Compound>**

Preparation Example 1

(i) Preparation of Ligand Compound

Isopropyl lithium (0.45 mL, 0.36 mmol, 0.79 M in pentane) was slowly added to 2-naphthyl-1,10-phenanthroline (0.789 g, 2.58 mmol) in toluene (8 mL) at -10 °C. After stirring at room temperature for 3 hours, degassed $H_2O$ (3 mL) was added thereto. The aqueous layer was removed with a syringe under $N_2$. The solvent was removed using a vacuum line and the residue was dissolved in degassed ethanol (15 mL) and THF (5 mL). The solution was transferred to a bomb reactor containing Pd/C (0.242 mmol, 10 mol %) under $N_2$. $H_2$ gas was charged to 5 bar and then stirred at room temperature for 12 hours. The $H_2$ gas was released and the catalyst residue was removed by filtration over celite. The solvent was removed and the residue was purified by silica gel column chromatography using ethyl acetate/hexane (1/3, v/v). A light yellow sticky solid was obtained (0.085 g, 73%). The 1H NMR and 13C NMR spectra are shown in FIG. 1.

- $^1$H NMR ($C_6D_6$) : δ 8.58 (d, *J* = 7.8 Hz, H), 7.75(d, *J* = 9.0 Hz, H), 7.70(d, *J* = 9.6 Hz, H), 7.66(d, *J* = 7.2 Hz, H), 7.63(d, *J* = 6.6 Hz, H), 7.32(m, 4H), 7.18 (d, *J* = 8.4 Hz, H), 6.99 (d, *J* = 7.8 Hz, H), 6.39 (s, H, NH), 2.93 (m, H), 2.79 (m, H), 2.70 (dt, *J* = 4.8 Hz, H), 1.70(m, H), 1.63(m, H), 1.47(m, H), 0.81(d, *J* = 7.2 Hz, 3H, $CH(CH_3)_2$), 0.76 (d, *J* = 7.2 Hz, 3H, $CH(CH_3)_2$) ppm.
- $^{13}C\{^1H\}$ NMR($C_6D_6$): δ 18.34, 18.77, 24.43, 26.78, 32.52, 56.73, 112.78, 116.67, 122.62, 125.59, 126.10, 126.51, 126.61, 126.86, 128.14, 128.69, 129.03, 129.28, 132.20, 134.71, 136.41, 137.64, 139.79, 141.75, 155.92 ppm.
- m/z calcd ([$M^+$] $C_{25}H_{24}N_2$) 352.4800. Found: 352.1942.

(ii) Preparation of Transition Metal Compound

[Formula 1-3]

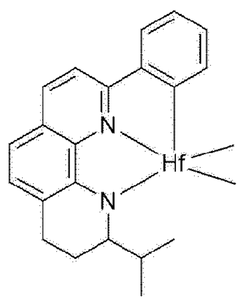

MeMgBr (1.24 mL, 3.11 M in diethyl ether) was added dropwise to a stirred suspension of $HfCl_4$ (0.300 g, 0.938 mmol) in toluene (8 mL) at -78 °C. After stirring for 1 hour within the temperature range of -40 °C to -35 °C, the solution was cooled again to -78 °C. A solution (0.24 g, 0.94 mmol) of the ligand compound (0.366 g, 1.00 mmol) in toluene (4 mL) was added dropwise thereto. The resulting solution was stirred at a controlled temperature within the range of -40 °C to -35 °C for 2 hours, and then stirred at room temperature overnight. The solvent was removed using a vacuum line and the residue was extracted with toluene (50 mL). Dark brown powder was obtained by milling in hexane (0.226 g, 47%). The $^1$H NMR and $^{13}$C NMR spectra are shown in FIG. 2.

- $^1$H NMR($C_6D_6$): δ 8.66 (d, *J* = 7.8 Hz, H), 8.50(d, *J* = 7.8 Hz, H), 7.92(d, *J* = 9.0 Hz, H), 7.83(d, *J* = 7.2 Hz, H), 7.76(d, *J* = 8.4 Hz, H), 7.62(d, *J* = 7.8 Hz, H), 7.40(td, *J* = 7.2 Hz, H), 7.32(m, H), 7.14(d, *J* = 7.8 Hz, H), 6.77(d, *J* = 7.2 Hz, H), 4.02(m, H), 2.80(m, H), 2.62(dt, *J* = 6.0 Hz, H), 2.55(m, H), 1.88(m, H), 1.72(m, H), 1.09 and 1.04(d, *J* = 6.6 Hz, 6H, $CH(CH_3)_2$), 0.82 (s, 3H, $HfCH_3$), 0.81(s, 3H, $HfCH_3$) ppm.
- 13C{$^1$H} NMR($C_6D_6$): δ 18.55, 21.28, 23.07, 25.44, 32.58, 60.98, 63.06, 66.88, 112.37, 119.64, 120.21, 124.55, 125.48, 126.81, 126.97, 129.31, 129.97, 130.26, 131.25, 133.82, 135.51, 140.97, 141.44, 143.94, 150.14, 164.58,

209.13 ppm.

- Anal. Calcd. ($C_{27}H_{28}HfN_2$): C, 58.01; H, 5.05; N, 5.01%.
- Found: C, 57.91; H, 5.01; N, 5.11%.

**<Preparation of Cocatalyst>**

Excess $K^+[B(C_6F_5)_4]^-$ (0.633 g, 0.881 mmol, assuming pure) was reacted with a solution of $[(C_{18}H_{37})_2N(H)Me]^+[Cl]^-$ (0.404 g, 0.705 mmol) in toluene (anhydrous, 10 mL) for 1 hour at room temperature in a glove box. After filtering over celite, the solvent was removed using a vacuum line. The residue was dissolved in methylcyclohexane (4 mL) and filtered again over celite. The solvent was removed to produce a yellow oily compound, which was used without further purification (0.797 g, 93%).

- $^1H$ NMR($C_6D_6$): δ 3.15(br, H, NH), 1.97(m, 2H, $NCH_2$), 1.80(m, H, $NCH_2$), 1.51(d, *J* = 6.0 Hz, 3H, $NCH_3$), 1.45-1.29(m, 48H), 1.26(quintet, *J* = 7.2 Hz, 4H), 1.13(quintet, *J* = 7.2 Hz, 4H), 0.94(t, *J* = 7.8 Hz, 6H), 0.88(quintet, *J* = 7.8 Hz, 4H), 0.81(m, 4H) ppm.
- $^{19}F$ NMR($C_6D_6$) : δ -132.09, -161.75, -165.98.

**<Preparation of Organozinc Compound>**

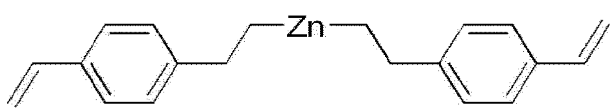

Borane dimethyl sulfide (1.6 mL, 3.2 mmol) was slowly added to triethylborane (0.6 g) under stirring and reacted for 90 minutes. The mixture was slowly added to divinylbenzene (3.8 g) dissolved in anhydrous diethyl ether (10 mL) cooled to -20 °C. The solvent was removed with a vacuum pump, and diethyl zinc (0.8 g) was added thereto. The reaction was carried out while the resulting triethylborane was removed by distillation under reduced pressure at 0 °C for 5 hours. Excessive amount of divinylbenzene and diethylzinc was removed by distillation under reduced pressure at 40 °C. After dissolving the product again by adding methylcyclohexane (150 mL), a solid compound produced as a byproduct was filtered and removed by using celite to produce an organozinc compound represented by Formula above.

**<Preparation of Polyolefin-polystyrene Multi-block Copolymer>**

**Example 1**

A Parr reactor (600 mL) was vacuum-dried at 120 °C for 2 hours. A solution of $Oc_3Al$ (349.0 mg, 238 μmol-Al) in methylcyclohexane (200 g) was added to the reactor. The mixture was stirred at 120 °C for 1 hour using a heating jacket and then the solution was removed using a cannula.

The reactor was filled with methylcyclohexane (200 g) containing $Oc_3Al$ (349.0 mg, 238 μmol-Al/25 wt% in hexane) as a scavenger and with 1-hexene (50.475g) as an olefin monomer, and then the temperature was set to 90 °C. A solution of the organozinc compound (479.5 μmol), as a chain transfer agent, in methylcyclohexane (1.58 g) was filled, and then a solution of methylcyclohexane (0.7 g) containing the transition metal compound (5.0 μmol-Hf) of Preparation Example 1 above activated with $[(C_{18}H_{37})_2N(H)Me]^+[B(C_6F_5)_4]^-$ (5.0μmol) in methylcyclohexane was injected. The polymerization was carried out for 40 minutes while the valve of the ethylene tank was opened to maintain the pressure in the reactor at 20 bar. The temperature was controlled within the range of 90-120 °C and the remainder of ethylene gas was discharged.

When the temperature reached 90 °C, a solution of $Me_3SiCH_2Li$ (PMDETA) prepared by mixing $Me_3SiCH_2Li$ (64.6 mg, 0.686 mmol) and PMDETA (130.7 mg, 0.755 mmol) with methylcyclohexane (3.85 g) was added. While stirring, the temperature was maintained at 90 °C for 30 minutes, and then styrene (15.0 g) was injected. The temperature was controlled in the range of 90-100 °C using the heating jacket.

Viscosity was gradually increased to almost reach an invisible state within 5 hours. The $^1H$ NMR analysis of the aliquot confirmed that the styrene was completely converted. After complete conversion of the styrene, 2-ethylhexanoic acid and ethanol were continuously injected. The resulting polymer mass (29 g) was dried in a vacuum oven at 80 °C overnight.

**Examples 2 to 7**

Examples 2 to 7 were prepared in the same manner as in Example 1 above except that the reaction conditions were changed as shown in Table 1 below.

**Comparative Examples 1 to 4**

As commercially available SEBS, G1650, G1651, G1652, and G1654 from Kraton Inc. were used, respectively.

**Comparative Example 5**

Comparative Example 5 was prepared as follows by using the compound represented by the following formula as a transition metal compound:

[Comparative Formula 1]

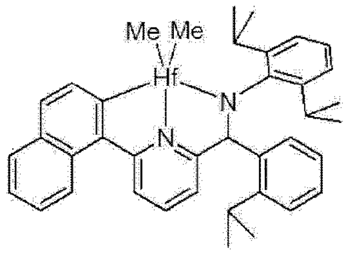

A solution of trimethylaluminum (14.4 mg, 200 umol-Al) dissolved in methylcyclohexane (17 g) was injected into a high-pressure reactor. The catalyst poison in the high-pressure reactor was purged at 100 °C for 1 hour and the solution was removed using a cannula.

The organozinc compound (49.1 mg, 150 μmol) was dissolved in methylcyclohexane (40 g) and put into the high-pressure reactor, and the temperature was raised to 80 °C. A solution in which the transition metal compound $(C_{18}H_{37})N(Me)H^+[B(C_6F_5)_4]^-$ (4.0 μmol) was stirred in benzene for 2 hours was diluted with a solution (1.0 g) in which trioctyl aluminum (50 μmol, 18.3 mg) was dissolved in methylcyclohexane (15 g). Immediately after injecting the catalyst solution into the high-pressure reactor, the ethylene-propylene mixed gas was injected at a pressure of 20 bar. The temperature was controlled in the range of 95-115 °C. The pressure was slowly reduced with the consumption of monomers and after carrying out the polymerization process at 45 °C for 55 minutes, the remaining gas was released.

$Me_3SiCH_2Li$ (150 μmol, 14.1 mg) and PMDETA (150 μmol, 26 mg) were mixed with methylcyclohexane (1.0 g), injected into the reactor, and stirred for 30 minutes. The stirring temperature was maintained at 90-100 °C. Styrene (7.8 g) was injected into the high-pressure reactor and reacted over 5 hours while maintaining the temperature between 90 °C and 100 °C to convert all of the styrene monomers. After complete conversion of the styrene monomers, acetic acid and ethanol were continuously injected. The polymer was obtained and then dried in a vacuum oven at 180 °C overnight.

**Comparative Examples 6 and 7**

The copolymer was prepared in the same manner as in Comparative Example 5 except that the reaction conditions were changed as shown in Table below.

[Table 1]

| | Catalyst type | Feeding amount of catalyst (μmol) | Cocatalyst (μmol) | Zn (μmol) | Alpha-olefin | | Styrene (g) | Chain transfer reaction temperature, time |
|---|---|---|---|---|---|---|---|---|
| | | | | | Type | Feeding amount | | |
| Example 1 | Formula 1-3 | 5.0 | 5.0 | 479.5 | 1-hexene | 50. 475g | 15.0 | 90-120 °C, 40 min |
| Example 2 | Formula 1-3 | 5.0 | 5.0 | 479.5 | 1-hexene | 40.38g | 16.0 | 90-120 °C, 40 min |

(continued)

| | Catalyst type | Feeding amount of catalyst (μmol) | Cocatalyst (μmol) | Zn (μmol) | Alpha-olefin | | Styrene (g) | Chain transfer reaction temperature, time |
|---|---|---|---|---|---|---|---|---|
| | | | | | Type | Feeding amount | | |
| Example 3 | Formula 1-3 | 1.5 | 1.5 | 144.3 | 1-hexene | 33. 65g | 16.0 | 90-120 °C, 40 min |
| Example 4 | Formula 1-3 | 1.5 | 1.5 | 144.3 | 1-hexene | 40.38g | 16.0 | 90-120 °C, 40 min |
| Example 5 | Formula 1-3 | 1.5 | 1.5 | 196.8 | 1-hexene | 47.11g | 16.0 | 90-120 °C, 40 min |
| Example 6 | Formula 1-3 | 1.5 | 1.5 | 481.0 | 1-hexene | 47.11g | 16.0 | 90-120 °C, 40 min |
| Example 7 | Formula 1-3 | 1.5 | 1.5 | 481.0 | 1-hexene | 60. 57g | 15.0 | 90-120 °C, 40 min |
| Comparative Example 1 | Commercially available SEBS (G1650) | | | | | | | |
| Comparative Example 2 | Commercially available SEBS (G1651) | | | | | | | |
| Comparative Example 3 | Commercially available SEBS (G1652) | | | | | | | |
| Comparative Example 4 | Commercially available SEBS (G1654) | | | | | | | |
| Comparative Example 5 | Comparative Formula 1 | 4.0 | 4.0 | 150 | 1-Propylene | 20bar | 7.8 g | 95-120 °C, 55 min |
| Comparative Example 6 | Comparative Formula 1 | 4.0 | 4.0 | 150 | 1-Propylene | 20bar | 7.8 g | 90-120 °C, 40 min |
| Comparative Example 7 | Comparative Formula 1 | 4.0 | 4.0 | 150 | 1-Propylene | 20bar | 7.8 g | 95-120 °C, 60 min |

**Experimental Example 1**

With respect to the polyolefin-polystyrene multi-block copolymers of Examples and Comparative Examples, physical properties of each of the copolymers were determined according to the following conditions and methods, and the results are shown in Table 2.

(1) Determination of Content of Ethylene, Alpha-Olefin and styrene

The content was determined through NMR. After $^1H$ NMR was determined under conditions of ns = 16, d1 = 3s, solvent = TCE-d2, and 373K using Bruker 600MHz AVANCE III HD NMR equipment, the peak of the TCE-d2 solvent was calibrated to 6.0 ppm, and $CH_3$ of 1-propylene at 1 ppm and the $CH_3$-related peak (triplet) of butyl-branch by 1-hexene near 0.96 ppm were identified, and then the content was calculated. In addition, the content of styrene was calculated with the aromatic peak near 6.5 ppm to 7.5 ppm.

(2) Weight average molecular weight (Mw, g/mol) and molecular weight distribution (polydispersity index, PDI)

The weight average molecular weight (Mw, g/mol) and number average molecular weight (Mn, g/mol) were each measured using gel permeation chromatography (GPC), and the molecular weight distribution (polydispersity index, PDI) was calculated by dividing the weight average molecular weight with the number average molecular weight.

- Column: PL Olexis
- Solvent: TCB (trichlorobenzene)
- Flow rate: 1.0 ml/min
- Sample concentration: 1.0 mg/ml
- Injection amount: 200 μL
- Column temperature: 160°C
- Detector: Agilent High Temperature RI detector
- Standard: Polystyrene
- Calculation of molecular weight by universal calibration using Mark-Howink equation ($K = 40.8 \times 10^{-5}$, $\alpha = 0.7057$)

(3) Calculation of Constants A to D in Equation 1

In order to calculate the constants A to D, GPC measurement data were fitted to a Gaussian function using Nonlinear Curve Fit in Origin.

[Table 2]

| | Composition | | | GPC | | Constant | | | |
|---|---|---|---|---|---|---|---|---|---|
| | Ethylene (wt%) | Alpha-olefin (wt%) | Styrene (wt%) | Mw (g/mol ) | PDI | A | B | C | D |
| Example 1 | 46.2 | 28.9 | 24.9 | 99,026 | 1.90 | 0.0082 7 | 4.8310 2 | 0.97859 | 0.7917 4 |
| Example 2 | 49.9 | 25.4 | 24.7 | 92,571 | 1.80 | 0.0135 6 | 4.8082 7 | 0.96903 | 0.7533 6 |
| Example 3 | 59.7 | 24.9 | 15.4 | 80,445 | 1.75 | 0.0172 | 4.7861 | 0.95276 | 0.6675 8 |
| Example 4 | 58.9 | 20.0 | 21.1 | 96,691 | 1.89 | 0.0241 | 4.7903 5 | 0.93594 | 0.6383 8 |
| Example 5 | 50.8 | 21.0 | 28.2 | 79,964 | 1.55 | 0.0144 2 | 4.7877 9 | 0.96941 | 0.6317 3 |
| Example 6 | 54.6 | 18.5 | 26.9 | 74,121 | 1.71 | 0.0322 4 | 4.7131 9 | 0.93248 | 0.6777 4 |
| Example 7 | 48.5 | 27.7 | 23.8 | 93,566 | 2.16 | 0.0141 2 | 4.7777 | 0.96411 | 0.8762 1 |
| Comparative Example 1 | 44.3 | 26.2 | 29.5 | 54,600 | 1.1 | 0.0335 8 | 4.7182 4 | 0.93825 | 0.2618 1 |
| Comparative Example 2 | 43.4 | 24.8 | 31.8 | 139,30 0 | 1.1 | 0.0290 8 | 5.1190 2 | 0.95502 | 0.3277 7 |
| Comparative Example 3 | 44.6 | 26.6 | 28.8 | 44,100 | 1.1 | 0.0413 3 | 4.6115 | 0.93611 | 0.2711 4 |
| Comparative Example 4 | 43.3 | 25.5 | 31.2 | 95,600 | 1.1 | 0.0467 4 | 4.9670 6 | 0.92435 | 0.2572 1 |
| Comparative Example 5 | 32.4 | 33.6 | 34.0 | 110, 88 6 | 1.76 | 0.0211 1 | 4.9278 | 0.94919 | 0.6935 |
| Comparative Example 6 | 39.4 | 18.6 | 42.0 | 101,00 6 | 1.71 | 0.0142 2 | 4.8628 4 | 0.97013 | 0.7189 4 |

(continued)

| | Composition | | | GPC | | Constant | | | |
|---|---|---|---|---|---|---|---|---|---|
| | Ethylene (wt%) | Alpha-olefin (wt%) | Styrene (wt%) | Mw (g/mol ) | PDI | A | B | C | D |
| Comparative Example 7 | 39.9 | 22.1 | 38.0 | 93,075 | 1.73 | 0.0158 3 | 4.8480 4 | 0.96417 | 0.7016 9 |

**Experimental Example 2**

With respect to the polyolefin-polystyrene multi-block copolymers of Examples and Comparative Examples, a $^{13}C$ NMR spectrum is shown in FIG. 4, and particularly, the peak values of the branch-point carbon atom and the terminal carbon atom of the branched chain from the branch-point are summarized in Table 3 below.

Specifically, a Bruker AVANCEIII 500 MHz NMR instrument was used, and about 50 mg of the sample was added to 1.2 mL of a TCE-d2 (tetrachloroethane-d2) solvent, and heated for 1 hour at 100 °C in a heating block and vortexed 2-3 times during heating. After confirming that the sample was uniformly dissolved, the solution was transferred to an NMR tube and a $^{13}C$ NMR spectrum was determined at 100 °C.

[Table 3]

| | Branch-point carbon atom | Terminal carbon atom of branched chain |
|---|---|---|
| Example 1 | 38 | 14 |
| Example 2 | 38 | 14 |
| Example 3 | 38 | 14 |
| Example 4 | 38 | 14 |
| Example 5 | 38 | 14 |
| Example 6 | 38 | 14 |
| Example 7 | 38 | 14 |
| Comparative Example 1 | 34 | 11 |
| Comparative Example 2 | 34 | 11 |
| Comparative Example 3 | 34 | 11 |
| Comparative Example 4 | 34 | 11 |
| Comparative Example 5 | 30 | 23 |
| Comparative Example 6 | 30 | 23 |
| Comparative Example 7 | 30 | 23 |

**Experimental Example 3**

(1) Tensile properties

According to the tensile test method of ASTM D412, each test sample was prepared and tensile strength, elongation at break, 300% modulus were determined.

[Table 4]

| | Tensile strength (MPa) | Elongation at break (%) | 300% Modulus (MPa) |
|---|---|---|---|
| Example 1 | 21.5 | 1,799 | 2.7 |
| Example 2 | 26.5 | 1,710 | 3.8 |

(continued)

| | Tensile strength (MPa) | Elongation at break (%) | 300% Modulus (MPa) |
|---|---|---|---|
| Example 3 | 26.7 | 2,363 | 2.9 |
| Example 4 | 32.69 | 1,801 | 5.2 |
| Example 5 | 25.3 | 1,476 | 5.7 |
| Example 6 | 34.3 | 1,405 | 6.9 |
| Example 7 | 22.3 | 2,047 | 2.4 |
| Comparative Example 1 | 29.9 | 1,305 | 2.9 |
| Comparative Example 2 | 27.6 | 1,849 | 1.8 |
| Comparative Example 3 | 30.7 | 1,325 | 3.3 |
| Comparative Example 4 | 30.6 | 1,584 | 2.2 |
| Comparative Example 5 | 2.9 | 480 | 3.5 |
| Comparative Example 6 | 6.1 | 469 | 4.2 |
| Comparative Example 7 | 4.25 | 486 | 2.3 |

As shown in Table 4 above, it was confirmed that the block copolymers of Examples 1 to 7 satisfying all of the conditions (a) to (d) presented by the present invention exhibited uniform excellent tensile properties of tensile strength, elongation at break, and 300% modulus at a certain level, compared to the copolymers of Comparative Examples which do not satisfy all of the conditions.

## Claims

1. A polyolefin-polystyrene multi-block copolymer satisfying the following conditions (a) to (c) determined by gel permeation chromatography (GPC) and the following condition (d) in a $^{13}C$ NMR at 500 MHz using tetrachloroethane-d2 as a solvent, and tetramethylsilane (TMS) as a standard material) spectrum:

   (a) a weight average molecular weight ($M_w$) of 50,000 g/mol to 150,000 g/mol;
   (b) a molecular weight distribution of 1.5 to 3.0;
   (c) a differential of concentration fraction to logarithm of molecular weight as a function of logarithm of molecular weight, obtained from GPC, is modeled to a Gaussian function represented by Equation 1 below, wherein, in Equation 1 below, dw/dlogMw represents the differential, logMw represents the logarithm of molecular weight, and each constant value satisfies $0.006 < A < 0.04$, $4.6 < B < 5.0$, $0.9 < C < 1$, and $0.5 < D < 0.9$; and
   (d) a polyolefin block contained in the polyolefin-polystyrene multi-block copolymer includes at least one branched chain extending from a branch-point carbon atom to a terminal carbon atom, wherein the branch-point carbon atom has a peak at 36-40 ppm, and the terminal carbon atom has a peak at 13-15 ppm

   [Equation 1]

$$\frac{dw}{dlogMw} = A + \frac{Cexp\left(\frac{-4ln(2)(logMw - B)^2}{D^2}\right)}{D\sqrt{\frac{\pi}{4ln(2)}}}$$

   wherein, in Equation 1, Mw represents a weight average molecular weight of the polyolefin-polystyrene multi-block copolymer.

2. The polyolefin-polystyrene multi-block copolymer of claim 1, wherein each constant value in Equation 1 above is $0.007 < A < 0.035$, $4.6 < B < 4.9$, $0.91 < C < 0.99$, and $0.6 < D < 0.8$.

3. The polyolefin-polystyrene multi-block copolymer of claim 1, wherein the polyolefin-polystyrene multi-block copolymer has a weight average molecular weight of 60,000 g/mol to 120,000 g/mol.

4. The polyolefin-polystyrene multi-block copolymer of claim 1, wherein the polyolefin-polystyrene multi-block copolymer has a molecular weight distribution of 1.6 to 2.3.

5. The polyolefin-polystyrene multi-block copolymer of claim 1, wherein the polyolefin-polystyrene multi-block copolymer is at least one selected from the group consisting of a polystyrene-poly(ethylene-co-propylene)-polystyrene block copolymer, a polystyrene-poly(ethylene-co-1-butene)-polystyrene block copolymer, a polystyrene-poly(ethylene-co-1-pentene)-polystyrene block copolymer, a polystyrene-poly(ethylene-co-1-hexene)-polystyrene block copolymer, a polystyrene-poly(ethylene-co-1-heptene)-polystyrene block copolymer, and a polystyrene-poly(ethylene-co-1-octene)-polystyrene block copolymer.

## Patentansprüche

1. Polyolefin-Polystyrol-Multiblock-Copolymer, erfüllend die folgenden Bedingungen (a) bis (c), bestimmt mittels Gelpermeationschromatographie (GPC), und die folgende Bedingung (d) in einem $^{13}C$-NMR Spektrum, aufgenommen bei 500 MHz unter Verwendung von Tetrachlorethan-d2 als Lösungsmittel und Tetramethylsilan (TMS) als Standardmaterial):

(a) das gewichtsgemittelte Molekulargewicht ($M_w$) beträgt 50.000 g/mol bis 150.000 g/mol;
(b) die Molekulargewichtsverteilung beträgt 1,5 bis 3,0;
(c) das Differential der Konzentrationsfraktion zum Logarithmus des Molekulargewichts als Funktion des Logarithmus des Molekulargewichts, erhalten aus der GPC, wird mit einer Gauss-Funktion, die durch die nachstehende Gleichung 1 dargestellt ist, modelliert, worin in der nachstehenden Gleichung 1 dw/dlogMw das Differential darstellt, logMw den Logarithmus des Molekulargewichts darstellt und jeder Konstantenwert erfüllt 0,006 < A < 0,04, 4,6 < B < 5,0, 0,9 < C < 1 und 0,5 < D < 0,9; und
(d) ein in dem Polyolefin-Polystyrol-Multiblock-Copolymer enthaltener Polyolefinblock umfasst zumindest eine verzweigte Kette, die sich von einem verzweigenden Kohlenstoffatom zu einem endständigen Kohlenstoffatom erstreckt, worin das verzweigende Kohlenstoffatom einen Peak bei 36-40 ppm aufweist und das endständige Kohlenstoffatom einen Peak bei 13-15 ppm aufweist

[Gleichung 1]

$$\frac{dw}{dlogMw} = A + \frac{Cexp(\frac{-4ln(2)(logMw - B)^2}{D^2})}{D\sqrt{\frac{\pi}{4ln(2)}}}$$

worin in der Gleichung 1 Mw dass gewichtsgemittelte Molekulargewicht des Polyolefin-Polystyrol-Multiblock-Copolymers darstellt.

2. Polyolefin-Polystyrol-Multiblock-Copolymer gemäß Anspruch 1, worin jeder Konstantenwert in der vorstehenden Gleichung 1 0,007 < A < 0,035, 4,6 < B > 4,9, 0,91 < C < 0,99 und 0,6 < D < 0,8 erfüllt.

3. Polyolefin-Polystyrol-Multiblock-Copolymer gemäß Anspruch 1, worin das Polyolefin-Polystyrol-Multiblock-Copolymer ein gewichtsgemitteltes Molekulargewicht von 60.000 g/mol bis 120.000 g/mol aufweist.

4. Polyolefin-Polystyrol-Multiblock-Copolymer gemäß Anspruch 1, worin das Polyolefin-Polystyrol-Multiblock-Copolymer eine Molekulargewichtsverteilung von 1,6 bis 2,3 aufweist.

5. Polyolefin-Polystyrol-Multiblock-Copolymer gemäß Anspruch 1, worin das Polyolefin-Polystyrol-Multiblock-Copolymer zumindest eines ist, ausgewählt aus der Gruppe bestehend aus einem Polystyrol-Poly(ethylen-co-propylen)-Polystyrol-Block-Copolymer, einem Polystyrol-Poly(ethylen-co-1-buten)-Polystyrol-Block-Copolymer, einem Polystyrol-Poly(ethylen-co-1-penten)-Polystyrol-Block-Copolymer, einem Polystyrol-Poly(ethylen-co-1-hexen)-Polystyrol-Block-Copolymer, einem Polystyrol-Poly(ethylen-co-1-hepten)-Polystyrol-Block-Copolymer und einem Polystyrol-Poly(ethylen-co-1-octen)-Polystyrol-Block-Copolymer.

**Revendications**

1. Copolymère multiblocs de polyoléfine-polystyrène satisfaisant les conditions (a) à (c) suivantes déterminées par chromatographie par perméation de gel (GPC) et la condition (d) suivante dans une NMR du $^{13}C$ à 500 MHz en utilisant du tétrachloroéthane-d2 comme solvant et du tétraméthylsilane (TMS) comme spectre de matière standard :

   (a) un poids moléculaire moyen en poids ($M_w$) compris entre 50 000 g/mol et 150 000 g/mol ;
   (b) une distribution de poids moléculaire comprise entre 1,5 et 3,0 ;
   (c) une différentielle de fraction de concentration par rapport à un logarithme de poids moléculaire en fonction du logarithme de poids moléculaire, obtenu par GPC, est modélisée comme une fonction gaussienne représentée par l'Équation 1 ci-dessous, dans lequel, dans l'Équation 1 ci-dessous, dw/dlogMw représente la différentielle, logMw représente le logarithme de poids moléculaire, et chaque valeur constante satisfait 0,006 < A < 0,04, 4,6 < B < 5,0, 0,9 < C < 1, et 0,5 < D < 0,9 ; et
   (d) un bloc polyoléfine contenu dans le copolymère multiblocs de polyoléfine-polystyrène inclut au moins une chaîne ramifiée se prolongeant d'un atome de carbone à point de ramification à un atome de carbone terminal, dans lequel l'atome de carbone à point de ramification présente un pic à 36-40 ppm, et l'atome de carbone terminal présente un pic à 13-15 ppm

[Équation 1]

$$\frac{dw}{dlogMw} = A + \frac{Cexp(\frac{-4ln(2)(logMw - B)^2}{D^2})}{D\sqrt{\frac{\pi}{4ln(2)}}}$$

dans lequel, dans l'Équation 1, Mw représente un poids moléculaire moyen en poids du copolymère multiblocs de polyoléfine-polystyrène.

2. Copolymère multiblocs de polyoléfine-polystyrène selon la revendication 1, dans lequel chaque valeur constante dans l'Équation 1 ci-dessus est 0,007 < A < 0,035, 4,6 < B < 4,9, 0,91 < C < 0,99, et 0,6 < D < 0,8.

3. Copolymère multiblocs de polyoléfine-polystyrène selon la revendication 1, dans lequel le copolymère multiblocs de polyoléfine-polystyrène présente un poids moléculaire moyen en poids compris entre 60 000 g/mol et 120 000 g/mol.

4. Copolymère multiblocs de polyoléfine-polystyrène selon la revendication 1, dans lequel le copolymère multiblocs de polyoléfine-polystyrène présente une distribution de poids moléculaire comprise entre 1,6 et 2,3.

5. Copolymère multiblocs de polyoléfine-polystyrène selon la revendication 1, dans lequel le copolymère multiblocs de polyoléfine-polystyrène est au moins un choisi dans le groupe consistant en un copolymère bloc de polystyrène-poly(éthylène-co-propylène)-polystyrène, un copolymère bloc de polystyrène-poly(éthylène-co-1-butène)-polystyrène, un copolymère bloc de polystyrène-poly(éthylène-co-1-pentène)-polystyrène, un copolymère bloc de polystyrène-poly (éthylène-co-1-hexène)-polystyrène, un copolymère bloc de polystyrène-poly(éthylène-co-1-heptène)-polystyrène et un copolymère bloc polystyrène-poly(éthylène-co-1-octène)-polystyrène.

FIG. 1

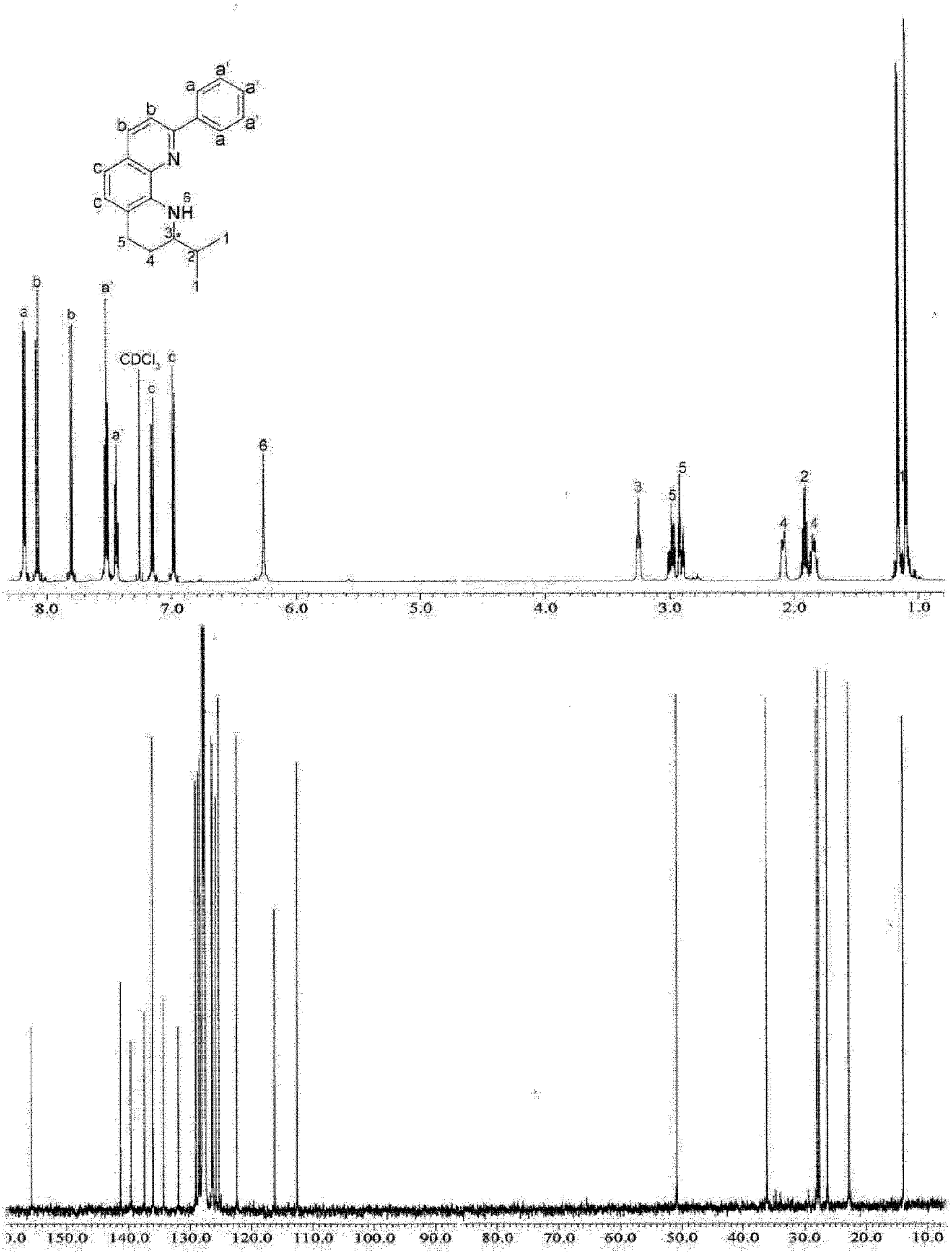
CDCl3
8.0
7.0
6.0
5.0
4.0
3.0
2.0
1.0
150.0
140.0
130.0
120.0
110.0
100.0
90.0
80.0
70.0
60.0
50.0
40.0
30.0
20.0
10.0

FIG. 2

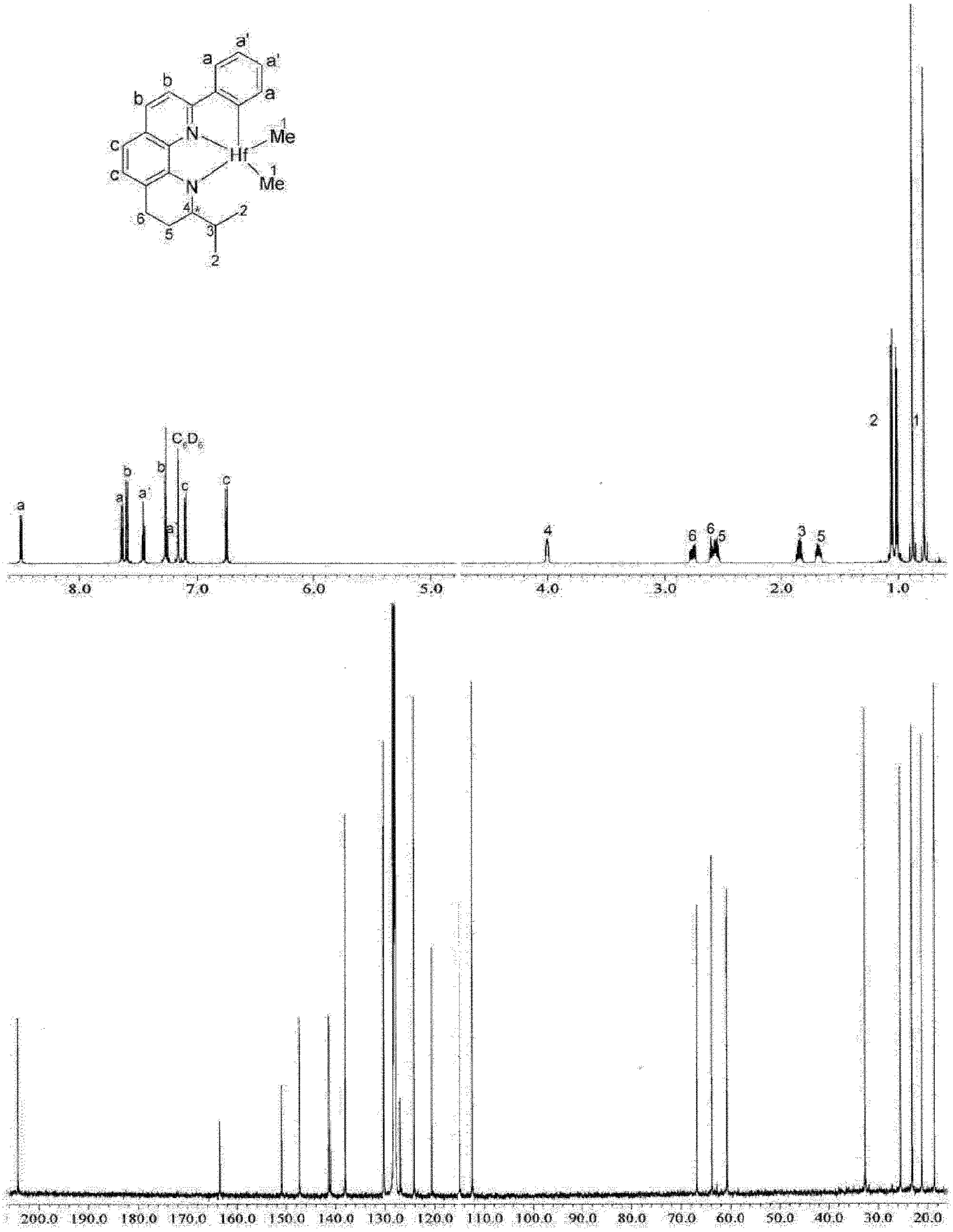
a
a
b
a'
b
a'
C6D6
c
c
4
6
6
5
3
5
2
1
8.0
7.0
6.0
5.0
4.0
3.0
2.0
1.0
200.0 190.0 180.0 170.0 160.0 150.0 140.0 130.0 120.0 110.0 100.0 90.0 80.0 70.0 60.0 50.0 40.0 30.0 20.0

FIG. 3

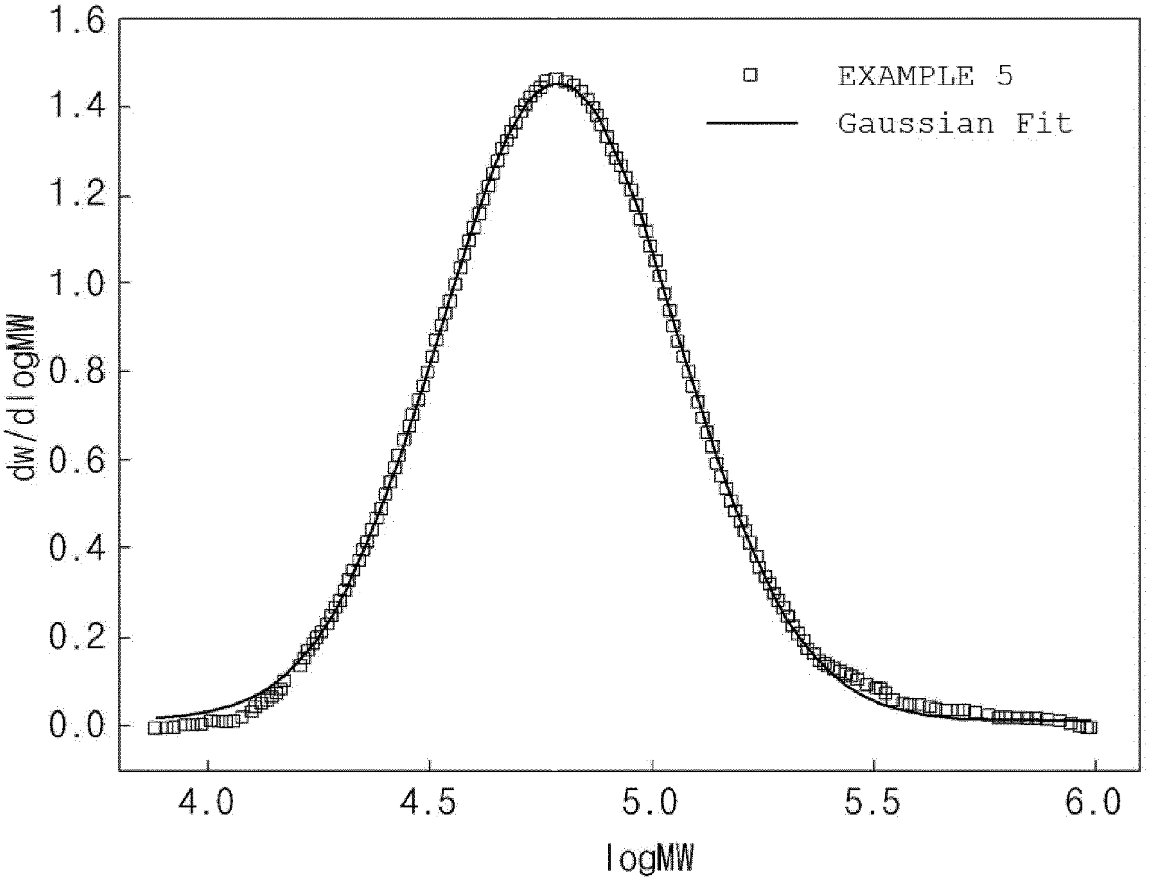
EXAMPLE 5
Gaussian Fit
dw/dlogMW
logMW
0.0
0.2
0.4
0.6
0.8
1.0
1.2
1.4
1.6
4.0
4.5
5.0
5.5
6.0

FIG. 4

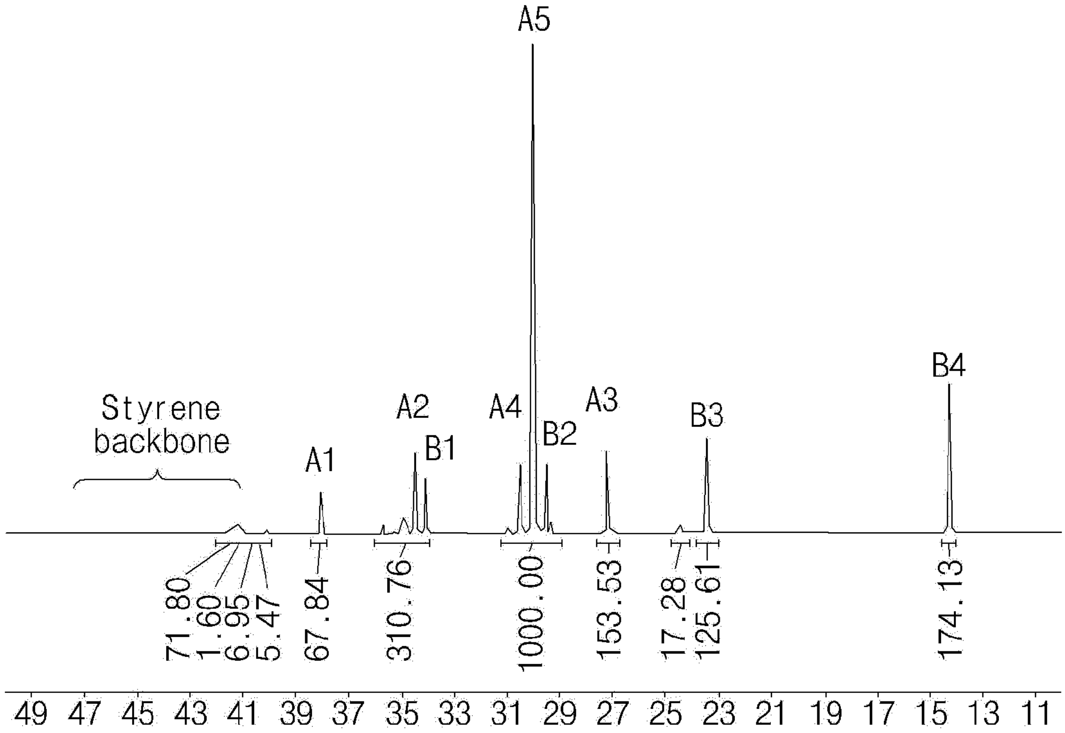
A5
B4
Styrene
backbone
A2
A4
A3
B1
B2
B3
A1
71.80
1.60
6.95
5.47
67.84
310.76
1000.00
153.53
17.28
125.61
174.13
49 47 45 43 41 39 37 35 33 31 29 27 25 23 21 19 17 15 13 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190058295
- KR 1020190121192
- KR 101848781 B1
- KR 101657925